(19) Europäisches Patentamt
European Patent Office
Office européen des brevets

(11) **EP 1 972 051 B1**

(12) **FASCICULE DE BREVET EUROPEEN**

(45) Date de publication et mention de la délivrance du brevet:
**18.10.2017 Bulletin 2017/42**

(51) Int Cl.:
***H02P 6/18*** *(2016.01)*

(21) Numéro de dépôt: **06842167.6**

(22) Date de dépôt: **14.12.2006**

(86) Numéro de dépôt international:
**PCT/FR2006/051357**

(87) Numéro de publication internationale:
**WO 2007/080294 (19.07.2007 Gazette 2007/29)**

(54) **PROCÉDÉ DE DÉTERMINATION DE LA POSITION D'UN ROTOR D'UNE MACHINE SYNCHRONE MUNI D'AU MOINS UN ENROULEMENT D'EXCITATION**

VERFAHREN ZUR BESTIMMUNG DER POSITION EINES ROTORS IN EINER SYNCRHONMASCHINE MIT MINDESTENS EINER ERREGERWICKLUNG

METHOD FOR DETERMINING THE POSITION OF A ROTOR OF A SYNCHRONOUS MACHINE HAVING AT LEAST ONE EXCITATION WINDING

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.01.2006 FR 0600224**

(43) Date de publication de la demande:
**24.09.2008 Bulletin 2008/39**

(73) Titulaire: **VALEO EQUIPEMENTS ELECTRIQUES MOTEUR**
**94046 Créteil (FR)**

(72) Inventeurs:
• **VILAIN, Jean-Paul**
  **F-60150 Melicocq (FR)**
• **KOBYLANSKI, Luc**
  **F-75014 Paris (FR)**
• **CHABOUR, Ferhat**
  **F-60200 Compiegne (FR)**

(74) Mandataire: **Tran, Chi-Hai et al**
**Valeo Systèmes Thermiques**
**8, rue Louis Lormand**
**CS 80517 La Verrière**
**78322 Le Mesnil Saint Denis Cedex (FR)**

(56) Documents cités:
**EP-A1- 0 454 039       DE-B3- 10 114 293**
**FR-A1- 2 249 479       US-A- 4 746 850**
**US-A1- 2005 283 324**

## Description

### *Domaine de l'invention*

L'invention concerne un procédé de détermination de la position à l'arrêt ou à faible vitesse d'un rotor d'une machine synchrone muni d'au moins un enroulement d'excitation. La présente invention trouve des applications particulièrement avantageuses, mais non exclusives, dans les domaines du secteur automobile, du secteur aéronautique, du secteur industriel.

Elle concerne aussi un dispositif mettant en oeuvre ledit procédé de détermination de la position à l'arrêt ou à faible vitesse d'un rotor d'une machine synchrone muni d'au moins un enroulement d'excitation.

### *Etat de la technique*

Actuellement, une machine électrique synchrone autopilotée comporte deux parties concentriques, une partie tournante qui est le rotor et une partie fixe qui est le stator. La machine électrique est par exemple une machine réversible telle qu'un alterno-démarreur. Le rotor et le stator sont séparés par un entrefer. Le stator comporte une pluralité d'enroulements statoriques, appelés les phases de la machine. Ces enroulements statoriques, régulièrement répartis autour d'un axe central de la machine, permettent de générer un champ magnétique tournant.

Le rotor, peut être pourvu d'un aimant permanent. Le rotor peut être également muni d'un ou de plusieurs enroulements d'excitation disposés de façon à ce que leurs inductances mutuelles avec les enroulements statoriques soit une fonction de la position dudit rotor.

Un problème rencontré avec ce type de machine est qu'il est nécessaire de déterminer la position angulaire à l'arrêt du rotor par rapport aux enroulements statoriques, pour pouvoir faire démarrer la machine électrique avec un couple maximal. En effet, pour commander un dispositif de pilotage de la machine alimentant les enroulements statoriques, on doit déterminer la position angulaire du rotor à l'instant où l'on applique des tensions d'alimentation aux enroulements statoriques. Connaissant cette position, il est alors possible d'alimenter la machine de sorte que le flux créé au stator reste toujours sensiblement en quadrature électrique avec le flux du rotor, permettant ainsi d'obtenir un couple maximal. La connaissance de cette position permet également de fixer le sens de démarrage de la machine.

Une première solution classique au problème de détermination de la position angulaire du rotor consiste à équiper la machine électrique de capteurs de position tels que trois capteurs magnétiques à effet Hall. Ces trois capteurs magnétiques sont décalés spatialement de 120 degrés électriques. Le rapport entre les degrés électriques et les degrés mécaniques dépend du nombre de pôles du rotor. Une période électrique est un tour complet entre un pôle nord et le pôle nord suivant du rotor. Cette période électrique est égale à 360 ° électriques.

Les capteurs magnétiques se situent dans le champ magnétique d'une cible magnétique fixée au rotor de la machine. Cette cible magnétique subit une opération de magnétisation, réalisée en usine. Les capteurs magnétiques sont fixés au stator, en face de cette cible magnétique, de manière à commuter lors des inversions de champs magnétiques. On rappelle qu'une cellule à effet Hall est agencée pour pouvoir détecter les variations d'un champ magnétique avoisinant.

Pour une période de 360° électrique, chaque capteur magnétique délivre un signal binaire égal à 0 sur une durée angulaire de 180° électriques et un signal binaire égal à 1 sur le reste de la période. La combinaison logique de ces trois signaux binaires permet d'en déduire la position angulaire du rotor avec une résolution de 60° électriques.

Cette résolution peut être affinée par une augmentation du nombre de capteurs magnétiques. Ce type de capteur permet de détecter la position du rotor tant à l'arrêt qu'en rotation dudit rotor.

Une telle solution présente divers inconvénients. Notamment, les capteurs magnétiques à effet Hall sont relativement onéreux, et leur montage au voisinage de la machine augmente l'encombrement de cette dernière. En outre, il est nécessaire d'utiliser, en plus des câbles d'alimentation de la machine, d'autres câbles pour alimenter les capteurs magnétiques à effet Hall et de la connectique pour collecter les informations fournies par lesdits capteurs. Il va de soi que l'agencement de tels câbles et connectique dans un environnement difficile d'accès où sont installés les capteurs va à l'encontre des contraintes de maniabilité, de poids, de robustesse, de fiabilité et de coût. De plus, l'opération de magnétisation réalisée sur la cible magnétique augmente le coût global d'une telle machine.

Une deuxième solution classique au problème de détermination de la position angulaire du rotor consiste à équiper la machine de capteurs optiques. Ces capteurs optiques détectent le passage d'une bande réfléchissante ou opaque solidaire du rotor. Ils ont le même type de fonctionnement que les capteurs à effet Hall précédemment décrits. De même, la résolution est de 60 degrés électriques. Ce type de capteurs présente les mêmes inconvénients que les capteurs magnétiques.

Ces capteurs de position de l'état de la technique présentent un inconvénient considérable du fait que la méthode de détection utilisée pour déceler la position du rotor est une détection mécanique de la position du rotor ayant une résolution angulaire mécanique. Avec cette méthode, plus le nombre de paires de pôles du rotor augmente plus la résolution électrique se dégrade.

Une troisième solution classique au problème de détermination de la position du rotor consiste à équiper la machine d'un résolveur permettant de fournir une position quasi absolue du rotor par rapport au stator. Un inconvénient d'une telle solution réside dans le fait que le résolveur est fragile et difficile à mettre en oeuvre dans la machine. Cette solution est plus onéreuse que les solutions précédentes même si ses performances sont nettement supérieures à celles desdites solutions.

On observe donc que les solutions proposées dans l'état de la technique pour répondre au problème de détection de la position à l'arrêt du rotor ne sont pas satisfaisantes pour répondre notamment à des contraintes d'encombrement, de fiabilité, de poids et surtout de coût et à des préoccupations propres à des domaines d'application spécifiques, tels que l'automobile.

### Exposé de l'invention

L'invention a justement pour but de remédier aux inconvénients des techniques exposées précédemment. Pour cela, l'invention propose de modifier les techniques de détection de la position à l'arrêt du rotor existantes dans le but de supprimer les capteurs de position usuels et la cible magnétique. Cette suppression de tels éléments dans l'invention permet de supprimer les câbles ainsi que la connectique, de manière à répondre notamment aux contraintes de coût, de maniabilité, d'encombrement, de poids, de fiabilité.

L'invention permet ainsi une détection de la position à l'arrêt de la machine à rotor bobiné en l'absence de capteurs de position usuels tels que les capteurs magnétiques, optiques, résolveur, mécaniques, capacitifs...

La suppression du capteur et de sa mise en place entraîne un gain de place dans la machine d'où une possibilité ultérieure d'accroître la puissance de la machine pour un même volume disponible.

L'invention propose une technique de détection de la position du rotor à l'arrêt ou en rotation très lente, à partir des informations contenues dans les tensions engendrées aux bornes des enroulements statoriques, lorsque la tension appliquée à l'enroulement du rotor est soumise à des variations.

Avec l'invention, les seules mesures nécessaires pour mettre en oeuvre la technique de détection sont des mesures de tension. Elles ne nécessitent donc pas de transducteur spécifique, d'où un coût réduit.

Cette technique de l'invention utilise une méthode de détection électrique augmentant de la même manière la précision sur la position du rotor. Avec cette méthode, le nombre de paires de pôles du rotor peut être augmenté sans pour autant perdre cette précision. Cette méthode permet de déterminer une position électrique du rotor qui est un angle entre les axes magnétiques des enroulements du stator et les axes magnétiques du rotor.

La technique de détection de la position à l'arrêt du rotor de l'invention assure un démarrage ferme, dans le bon sens et rapide de la machine. Elle assure également un début de rotation pour une application d'un procédé de détection de position du rotor en rotation.

Avec l'invention, l'autopilotage n'est plus basé simplement sur la position du rotor, mais sur des phénomènes électromagnétiques. De ce fait les performances de la commande du dispositif de pilotage sont nettement améliorées.

Plus précisément, l'invention a pour objet un procédé de détermination de la position d'un rotor d'une machine, le rotor étant muni d'au moins un enroulement d'excitation, l'enroulement d'excitation étant connecté à un hacheur, la machine comportant n enroulements statoriques, n étant un nombre entier, le rotor étant couplé magnétiquement avec chacun des n enroulements statoriques de la machine, cette machine étant connectée à un dispositif de pilotage apte à la piloter en pleine onde ou en modulation de largeur d'impulsions,

Conformément à l'invention, le procédé comporte les étapes suivantes :

- inhibition du dispositif de pilotage,
- application d'une tension d'excitation variable dans le temps sur le rotor, au moyen du hacheur,
- mesure d'une force électromotrice induite ($e_1$, $e_2$ ou ..... $e_n$) dans chacun des enroulements statoriques,
- détermination d'une position du rotor à l'arrêt ou à faible vitesse, à partir d'au moins une opération de comparaison entre les forces électromotrices induites et d'au moins une opération de comparaison d'une force électromotrice induite et d'une référence commune,
- mise en oeuvre des commandes du dispositif de pilotage, selon la position déterminée du rotor.

Selon des modes de réalisation non limitatifs, le procédé selon l'invention comporte les caractéristiques supplémentaires suivantes :

- démodulation synchrone des forces électromotrices mesurées.
- comparaison d'une force électromotrice induite avec au moins l'un des éléments de l'ensemble formé par :
- une autre force électromotrice induite,
- une référence commune,
- l'opposée d'une autre force électromotrice induite.
- lorsqu'une première force électromotrice $e_1$ du premier enroulement statorique est supérieure à une deuxième force électromotrice $e_2$ du deuxième enroulement statorique, alors on produit un premier signal $C_{1.2}$ égal à 1, sinon le premier signal $C_{1.2}$ est égal à 0,
- lorsque la deuxième force électromotrice $e_2$ du deuxième enroulement statorique est supérieure à une troisième force électromotrice $e_3$ du troisième enroulement statorique, alors on produit un deuxième signal $C_{2.3}$ égal à 1, sinon le deuxième signal $C_{2.3}$ est égal à 0,
- lorsqu'une $(n-1)^{ème}$ force électromotrice $e_{(n-1)}$ du $(n-1)^{ème}$ enroulement statorique est supérieure à une dernière force électromotrice en du $(n)^{ème}$ enroulement statorique alors on produit un $(n-1)^{ème}$ signal

$C_{(n-1).(n)}$ égal à 1, sinon le $(n-1)^{ème}$ signal $C_{(n-1).(n)}$ est égal à 0,

- lorsque la dernière force électromotrice en du $(n)^{ème}$ enroulement statorique est supérieure à la première force électromotrice $e_1$ du premier enroulement statorique alors on produit un $n^{ème}$ signal $C_{n.1}$ égal à 1, sinon le $n^{ème}$ signal $C_{n.1}$ est égal à 0,
- détermination de la position du rotor à partir de la valeur des n signaux $C_{1.2}$, $C_{2.3}$, ......, $C_{(n-1).(n)}$ et $C_{n.1}$ représentatifs de la position du rotor, selon des règles prédéfinies.
- dans le cas où n est impair et/ou les n enroulements statoriques sont répartis de manière régulière,
- détermination de la position du rotor avec une précision de 360/2n degrés électriques.
- dans le cas où n est pair et/ou les n enroulements statoriques sont répartis de manière régulière,
- détermination de la position du rotor avec une précision de 360/n degrés électriques.
- dans le cas où n est pair et/ou les n/2 enroulements forment un premier système d'enroulements régulièrement répartis, les n/2 autres enroulements forment un second système d'enroulements régulièrement répartis, les deux systèmes étant déphasés de 360/(2n) degrés électriques,
- détermination de la position du rotor avec une précision de 360/2n degrés électriques.
- comparaison de chaque force électromotrice avec un signal de référence,
- lorsque la première force électromotrice $e_1$ du premier enroulement statorique est supérieure au signal de référence, alors on produit un $(n+1)^{ème}$ signal $C_{10}$ égale à 1, sinon le $(n+1)^{ème}$ signal $C_{10}$ est égal à 0,
- lorsque la deuxième force électromotrice $e_2$ du deuxième enroulement statorique est supérieure au signal de référence, alors on produit un $(n+2)^{ème}$ signal $C_{20}$ égal à 1, sinon le $(n+2)^{ème}$ signal $C_{20}$ est égal à 0,
- lorsque la $(n)^{ème}$ force électromotrice $e_n$ du dernier enroulement statorique est supérieure au signal de référence, alors on produit un $(2n)^{ème}$ signal $C_{n0}$ égal à 1, sinon le $(2n)^{ème}$ signal $C_{n0}$ est égal à 0,
- détermination de la position du rotor à partir de la valeur des 2n signaux $C_{1.2}$, $C_{2.3}$, ......, $C_{(n-1).(n)}$, $C_{n.1}$, $C_{10}$, $C_{20}$, ........ et $C_{n0}$ représentatifs de la position du rotor, selon des règles prédéfinies.
- dans le cas où n est impair et/ou les n enroulements statoriques sont répartis de manière régulière,
- détermination de la position du rotor avec une précision de 360/4n degrés électriques.
- dans le cas où n est pair et/ou les n enroulements statoriques sont répartis de manière régulière,
- détermination de la position du rotor avec une précision de 360/2n degrés électriques.
- dans le cas où n est pair et/ou n/2 enroulements forment un premier système d'enroulements régulièrement répartis, les n/2 autres enroulements forment un second système d'enroulements régulièrement répartis, les deux systèmes étant déphasés de 360/(2*n) degrés électriques,
- détermination de la position du rotor avec une précision de 360/4n degrés électriques.
- les 2n signaux $C_{1.2}$, $C_{2.3}$, ......, $C_{(n-1).(n)}$, $C_{n.1}$, $C_{10}$, $C_{20}$,..., et $C_{n0}$ sont rectangulaires et de même fréquence,
- ils sont obtenus par une démodulation synchrone.
- cette démodulation synchrone est une synchronisation définie par un retard relativement à un front montant de la commande du hacheur.
- détermination de la position du rotor, lorsque la machine est à l'arrêt.

L'invention concerne également un dispositif pour la mise en oeuvre dudit procédé, caractérisé en ce qu'il comporte une machine électrique reliée à un dispositif de pilotage, ledit dispositif de pilotage étant connecté à une logique de commande, la logique de commande mettant en oeuvre ledit procédé et fournissant une position du rotor.

Selon des modes de réalisation non limitatifs, le dispositif selon l'invention comporte les caractéristiques supplémentaires suivantes :

- la machine comporte un rotor muni d'au moins un enroulement d'excitation alimenté en tension variable dans le temps par un hacheur.

- le rapport cyclique du hacheur appartient à l'intervalle [0.01, 0.99].

### Brève description des dessins

L'invention sera mieux comprise à la lecture de la description qui suit et à l'examen des figures qui l'accompagnent. Celles-ci sont présentées à titre indicatif et nullement limitatif de l'invention. Les figures montrent :

Figure 1 : Une illustration de moyens mettant en oeuvre le procédé, selon l'invention,

Figure 2 : Une représentation schématique d'un rotor et d'un stator d'une machine triphasée,

Figure 3 : Une illustration des étapes, dans un premier mode de réalisation, du procédé selon l'invention,

Figure 4 : Une illustration des étapes, dans un deuxième mode de réalisation, du procédé selon l'invention,

Figure 5 : Une illustration de moyens mettant en oeuvre le premier mode de réalisation de l'invention, dans le cas d'une machine triphasée,

Figure 6 : Une représentation graphique du premier mode de réalisation de l'invention dans le cas d'une machine triphasée,

Figure 7 : Une représentation des positions vectorielles du rotor à l'arrêt ou à faible vitesse avec le premier mode de réalisation, selon l'invention, dans le cas d'une machine triphasée,

Figure 8 : Une illustration de moyens mettant en oeuvre le deuxième mode de réalisation de l'invention, dans le cas d'une machine triphasée,

Figure 9 : Une représentation graphique du deuxième mode de réalisation de l'invention, dans le cas d'une machine triphasée,

Figure 10 : Une représentation des positions vectorielles du rotor à l'arrêt ou à faible vitesse avec le deuxième mode de réalisation, selon l'invention, dans le cas d'une machine triphasée,

Figure 11 : Une représentation graphique du premier ainsi que du deuxième mode de réalisation de l'invention, dans le cas d'une machine comportant 6 phases,

### *Description détaillée de modes de réalisation de l'invention*

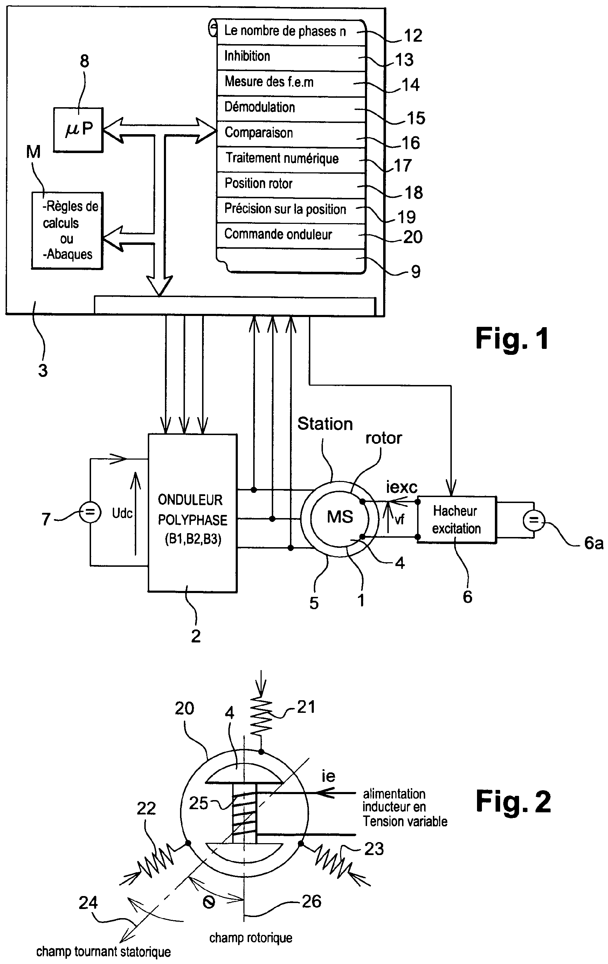

La figure 1 montre une machine électrique 1 reliée à un dispositif de pilotage 2 commandé par une logique de commande 3. Dans le domaine des machines électriques, on connaît différents types de machines, parmi lesquels on trouve essentiellement :

- des machines à griffe avec ou sans aimants,
- des machines synchrones à pôles saillants,
- des machines synchrones à rotor bobiné lisse,
- des machines à excitation hybride dont le flux à vide est obtenu par une association d'enroulements d'excitation parcourus par des courants électriques et d'aimants permanents,

Pour le reste de la description, la machine électrique 1 est une machine synchrone munie d'au moins un bobinage d'excitation. Elle peut être monophasée ou polyphasée.

La machine synchrone 1 comporte deux parties concentriques, le rotor 4 et le stator 5. Le rotor 4 ou inducteur est la partie tournante et le stator 5 ou induit est la partie fixe de la machine synchrone 1. Le rotor 4 est muni d'au moins un enroulement d'excitation. L'enroulement d'excitation du rotor 4 est parcouru par un courant d'excitation délivré, dans un exemple préféré, par un hacheur 6. Le courant d'excitation de l'enroulement du rotor crée un champ magnétique.

Le hacheur 6 permet de découper en une suite de rectangles périodiques une tension continue délivrée par une source continue 6a. Cette source de tension continue 6a peut être une batterie. Ce découpage périodique de la tension continue est obtenu, au moyen d'un interrupteur statique (non représenté). Lorsque l'interrupteur statique est fermé, la tension continue est appliquée aux bornes de l'enroulement du rotor 4. Le reste du temps, l'interrupteur statique est ouvert et la tension aux bornes de l'enroulement du rotor 4 est nulle. Dans un exemple préféré, la tension continue est égale à 12 volts. Ainsi, la tension appliquée à l'enroulement d'excitation est variable dans le temps.

Dans un mode de réalisation préféré, la machine 1 est à l'arrêt ou à faible vitesse quand l'enroulement du rotor 4 est parcouru par le courant d'excitation délivré par le hacheur 6. Dans ce cas, la machine se comporte comme un transformateur tournant ayant pour primaire l'enroulement d'excitation du rotor 4 et pour secondaire les enroulements du stator 5. Ainsi, des forces électromotrices sont induites dans les enroulements statoriques. Ces forces électromotrices sont proportionnelles d'une part à une tension alternative délivrée par le hacheur 6 et d'autre part au cosinus de l'angle que font les enroulements du stator 5 avec un axe de l'enroulement du rotor 4.

Le stator 5 peut être muni de plusieurs enroulements. Ces enroulements du stator sont connectés au dispositif de pilotage 2. Ce dispositif de pilotage 2 peut être notamment un onduleur. Dans l'exemple de la figure 1, le dispositif de pilotage 2 est un onduleur de tension.

L'onduleur 2 est destiné à convertir une tension continue en plusieurs tensions sinusoïdales, une par enroulement statorique. L'onduleur 2 est alimenté par une source de tension continue 7. Cette source de tension continue 7 est, dans un exemple préféré, une batterie ou un réseau redressé.

L'onduleur 2 comporte plusieurs bras de pont (non représentés). Chaque bras de pont est constitué de plusieurs interrupteurs commandables électroniquement. Le point milieu de chaque couple d'interrupteurs d'un même bras de pont de l'onduleur 2 est relié à un enroulement du stator 5.

L'onduleur 2 est piloté en pleine onde ou en modulation de largeur d'impulsions, couramment appelé MLI ou encore PWM en anglais, par la logique de commande 3. Pour piloter un onduleur polyphasé, la logique de commande 3 définit l'état ouvert ou fermé de l'ensemble des interrupteurs de l'onduleur 2.

Dans l'exemple de la figure 1, l'onduleur 2 est un onduleur triphasé deux niveaux en sachant qu'il peut être remplacé par d'autres types d'onduleur existants. L'onduleur 2 comporte donc trois bras de pont.

La logique de commande 3 est souvent réalisée sous forme de circuits intégrés. Dans un exemple, cette logique de commande 3 comporte un microprocesseur 8, une mémoire 9 de programme, une mémoire de calcul M, et une interface 10 d'entrée sortie. Le microprocesseur 8, la mémoire 9, la mémoire M et l'interface 10 d'entrée sortie sont interconnectés par un bus de communication 11. La mémoire M de calcul comporte des règles de calculs ou des abaques permettant de déterminer la position du rotor.

Dans la pratique, lorsque l'on prête une action à un dispositif, celle-ci est réalisée par un microprocesseur du dispositif commandé par des codes instructions enregistrés dans une mémoire de programme du dispositif. La logique de commande 3 est un tel dispositif.

La mémoire 9 de programme est divisée en plusieurs zones, chaque zone correspondant à des codes instructions pour réaliser une fonction du dispositif. La mémoire 9 comporte une zone 12 comportant des codes instructions pour déterminer le nombre n d'enroulements du stator. Ce nombre n est un nombre entier. La mémoire 9 comporte une zone 13 comportant des codes instructions pour commander l'inhibition de la commande de l'onduleur. La mémoire 9 comporte une zone 14 comportant des codes instructions pour effectuer des mesures des forces électromotrices induites sur les enroulements statoriques ainsi que la transmission de ces mesures à la logique de commande 3.

La mémoire 9 comporte une zone 15 comportant des codes instructions pour réaliser une démodulation synchrone ou asynchrone des forces électromotrices induites. La mémoire 9 comporte une zone 16 comportant des codes instructions pour effectuer soit une comparaison entre elles des forces électromotrices ou une comparaison des forces électromotrices à des valeurs de référence pour déterminer un intervalle d'appartenance de la position du rotor, soit pour effectuer une comparaison des forces électromotrices avec un signal de référence, par exemple un signal nul. Dans une variante, la zone 16 de comparaison peut être effectuée avant la zone de démodulation 15.

La mémoire 9 comporte une zone 17 comportant des codes instructions pour effectuer un traitement numérique des mesures des forces électromotrices induites. La mémoire 9 comporte une zone 18 comportant des codes instructions pour déterminer une position du rotor en fonction des résultats fournis par les zones 16 ou 17 associés à des règles de calcul ou à des abaques préalablement définis et enregistrés dans la mémoire M. La mémoire 9 comporte une zone 19 comportant des codes instructions pour calculer une précision de la position du rotor. Cette précision dépend de la parité du nombre n d'enroulement du stator ainsi que de la répartition desdits enroulements. La mémoire 9 comporte une zone 20 comportant des codes instructions pour déterminer une commande de l'onduleur à partir de la position du rotor déterminée grâce aux codes instructions de la zone 18.

La figure 2 montre une représentation schématique d'un rotor et d'un stator, dans le cas d'une machine triphasée. La machine comporte un entrefer 20 situé entre le rotor et le stator. Le stator peut être monté indifféremment en triangle, en étoile avec ou sans neutre. Le stator peut comporter une pluralité d'enroulements fixes. De même le rotor peut comporter une pluralité de pôles.

Dans l'exemple de la figure 2, le stator comporte un premier enroulement statorique 21, un deuxième enroulement statorique 22 et un troisième enroulement statorique 23. Les trois enroulements 21 à 23 du stator sont répartis de manière régulière dans l'espace. On entend par répartition régulière, un angle uniforme entre les différents enroulements statorique de la machine. Les courants alimentant les enroulements 21 à 23 du stator ont la même valeur efficace. Ces courants statoriques créent un champ magnétique 24 tournant dans le stator. Ce champ tournant 24 statorique est synchrone de la fréquence des courants statoriques. Le champ statorique tourne à la pulsation électrique du rotor. A l'arrêt du rotor le champ statorique est immobile.

Dans l'exemple de la figure 2, le rotor est bipolaire. Il comporte deux pôles, un pôle nord et un pôle sud. Le rotor peut être également multipolaire. Le stator possède le même nombre de paires de pôles que le rotor. Le rotor comporte un enroulement 25 centré sur les enroulements 21 à 23 fixes du stator. L'enroulement 25 du rotor est alimenté par un courant d'excitation le rendant semblable à un aimant, entraînant une création d'un champ magnétique 26 rotorique. Ce champ magnétique 26 rotorique ainsi créé cherche en permanence à s'aligner sur celui du stator. Ce champ magnétique 26 rotorique tourne à la même vitesse que le champ statorique 24.

Les enroulements statoriques de l'induit ou stator sont soumis au champ magnétique tournant de l'entrefer provoquant la création de forces électromotrices. La force électromotrice induite est la tension produite par la variation du flux magnétique à travers le stator. Les enroulements du stator sont disposés dans le stator de telle sorte que la force électromotrice soit de forme sinusoïdale.

Dans le cas d'une machine triphasée, en étoile ou en triangle, chaque enroulement présente une force électromotrice induite de même valeur efficace et déphasée de 120 degrés.

Les machines comportant un rotor multipolaire se ramènent à une machine comportant un rotor bipolaire au prix d'une transformation angulaire.

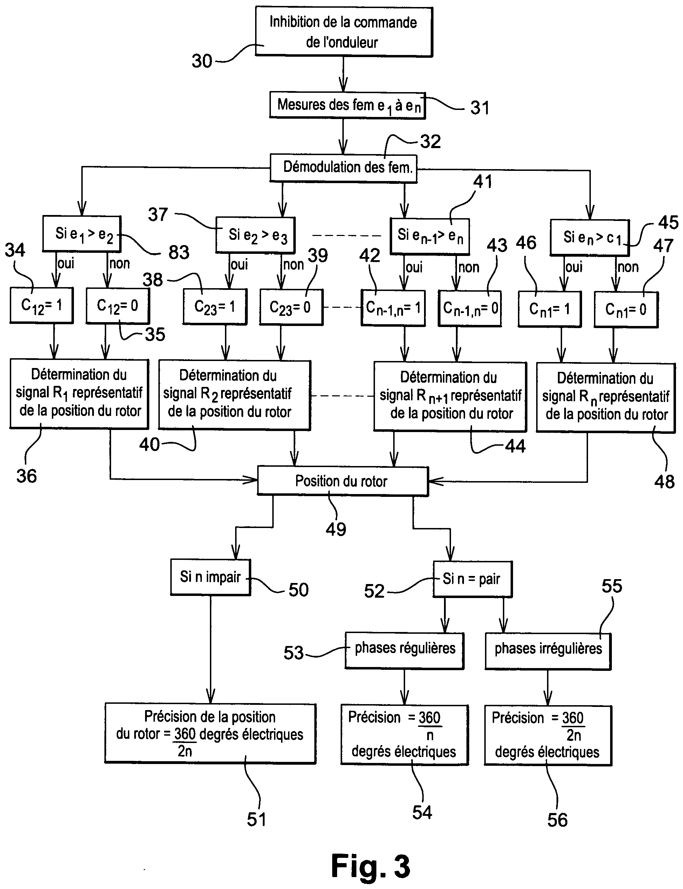

La figure 3 montre un procédé, selon l'invention, d'un premier mode de fonctionnement des moyens illustrés à la figure 1. La figure 3 montre une étape 30 préliminaire dans laquelle les commandes de l'onduleur sont entièrement inhibées, pour ne pas court-circuiter les enroulements du stator et fausser les mesures des forces électromotrices induites.

Après l'inhibition des commandes de l'onduleur, la logique de commande commande l'excitation de l'enroulement inducteur du rotor avec une période de découpage très inférieure à la constante de temps du rotor. Cette excitation induit des forces électromotrices de même fréquence aux bornes du stator. L'amplitude relative de ces forces électromotrices dépend de la position du rotor.

A l'étape 31, la logique de commande effectue les mesures des forces électromotrices. Lors de ces mesures, le rotor est de préférence à l'arrêt ou en rotation très lente.

Pour chaque enroulement statorique, la logique de commande mesure une force électromotrice induite au moyen, par exemple, d'un capteur de tension. Pour le premier enroulement statorique la logique de commande mesure une première force électromotrice $e_1$. Pour le deuxième enroulement statorique, elle mesure une deuxième force électromotrice $e_2$ ainsi de suite jusqu'au dernier enroulement statorique où elle mesure la $n^{ème}$ force électromotrice $e_n$. Ces notations seront gardées pour le reste de la description.

Lorsque les mesures des forces électromotrices induites e1 à $e_n$ sont effectuées selon un point neutre ou une référence quelconque alors, on parle de force électromotrice induite simple. Lorsque, les mesure des forces électromotrices induites $e_1$ à $e_n$ sont complètement différentielles sans recours à un point neutre ou à un point de référence quelconque alors on parle de force électromotrice induite composée. Que les forces électromotrices soient simples ou composées, le résultat obtenu est le même. Ces forces électromotrices induites ont pour expressions :

$$e_1 = k . v_f(t) . \cos(\theta - \theta_1)$$
$$e_2 = k . v_f(t) . \cos(\theta - \theta_2)$$
$$\dots\dots\dots$$
$$e_n = k . v_f(t) . \cos(\theta - \theta_n)$$

Où $v_f(t)$ est la composante alternative de la tension d'excitation, $\theta$ une position du rotor par rapport à une référence donnée, $\theta1, \theta2.....\theta n$ sont les positions des n enroulements du stator par rapport à la même référence et k une constante liée aux paramètres de la machine. L'amplitude de ces forces électromotrices induites est modulée par le cosinus de la position du rotor.

A l'étape 32, la logique de commande effectue une démodulation des forces électromotrices induites $e_1$ à $e_n$ mesurées et acquises par la logique de commande.

Cette démodulation est de préférence synchrone. Elle permet d'extraire un signal utile noyé dans du bruit. Ce principe s'applique généralement à des signaux de très faibles amplitudes. La démodulation synchrone est un moyen de minimiser l'influence du bruit sur le signal.

Dans l'exemple de la figure 3, les forces électromotrices sont démodulées par la tension $v_f(t)$ . Cette démodulation synchrone est un échantillonnage des forces électromotrices $e_1$, $e_2$ à en à des instants ayant un retard fixe par rapport aux instants de commutation de la tension $v_f$ Cette démodulation synchrone permet d'obtenir des signaux sinusoïdaux évoluant en fonction de la position du rotor.

Dans une variante, la logique de commande peut effectuer une démodulation asynchrone basée sur l'extraction de l'enveloppe des forces électromotrices induites en utilisant un détecteur de crête.

Les étapes 33 à 48 montrent les différentes étapes de comparaisons des forces électromotrices induites afin de déterminer un intervalle d'appartenance de l'angle de position du rotor. Ces étapes de comparaison peuvent comporter au moins l'un des éléments de l'ensemble formé par :

- comparaison d'une force électromotrice avec une autre force électromotrice,
- comparaison d'une force électromotrice avec une référence commune,
- comparaison d'une force électromotrice avec l'opposée d'une autre force électromotrice induite.

Dans l'exemple de la figure 3, les étapes 33 à 48 effectuent une comparaison de chaque force électromotrice avec une autre force électromotrice. Les résultats de ces comparaisons sont synchrones avec le signal d'excitation puisque les mesures des forces électromotrices sont synchronisées sur les fronts montants du signal de commande du hacheur. Dans une variante, la logique de commande peut comparer les forces électromotrices induites à des valeurs de références.

Dans une variante, la logique de commande peut d'abord effectuer les étapes de comparaisons 33 à 48 avant d'effectuer l'étape de démodulation 32.

Le fonctionnement de ces étapes de comparaisons 33 à 48 est illustré à la figure 3 pour n égal à 3.

A l'étape 33, la logique de commande compare la première force électromotrice $e_1$ à la deuxième force électromotrice $e_2$. Lorsque la première force électromotrice $e_1$ est supérieure à la deuxième force électromotrice $e_2$ alors la logique de commande applique l'étape 34 sinon elle applique l'étape 35.

A l'étape 34, la logique de commande produit un premier signal $C_{12}$, de préférence binaire, dont l'amplitude est égale à 1. A l'étape 35, le signal $C_{12}$ a une amplitude nulle.

A partir du premier signal $C_{12}$ obtenu à l'étape 34 ou 35, la logique de commande détermine à l'étape 36, un premier signal $R_1$ représentatif de la position du rotor.

A l'étape 37, la logique de commande compare la deuxième force électromotrice $e_2$ à la troisième force électromotrice $e_3$. Lorsque la deuxième force électromotrice $e_2$ est supérieure à la troisième force électromotrice $e_3$ alors la logique de commande applique l'étape 38 sinon elle applique l'étape 39.

A l'étape 38, la logique de commande produit un deuxième signal $C_{23}$, de préférence binaire, dont l'amplitude est égale à 1. A l'étape 39, le signal $C_{23}$, a une amplitude nulle.

A partir du deuxième signal $C_{23}$ obtenu à l'étape 38 ou 39, la logique de commande détermine à l'étape 40, un deuxième signal $R_2$ représentatif de la position du rotor. Ainsi de suite jusqu'à la $n^{ème}$ force électromotrice en.

A l'étape 41, la logique de commande compare la $(n-1)^{ème}$ force électromotrice $e_{n-1}$ à la dernière force électromotrice $e_n$. Lorsque la $(n-1)^{ème}$ force électromotrice $e_{n-1}$ est supérieure à la $n^{ème}$ force électromotrice en alors la logique de commande applique l'étape 42 sinon elle applique l'étape 43.

A l'étape 42, la logique de commande produit un $(n-1)^{ème}$ signal $C_{(n-1)(n)}$ de préférence binaire, dont l'amplitude est égale à 1. A l'étape 43, le signal $C_{(n-1)(n)}$ a une amplitude nulle.

A partir du $(n-1)^{ème}$ signal $C_{(n-1)(n)}$ obtenu à l'étape 42 ou 43, la logique de commande détermine à l'étape 44, un $(n-1)^{ème}$ signal $R_{n-1}$ représentatif de la position du rotor.

A l'étape 45, la logique de commande compare la $n^{ème}$ force électromotrice en à la première force électromotrice $e_1$. Lorsque la $n^{ème}$ force électromotrice en est supérieure à la première force électromotrice $e_1$ alors la logique de commande applique l'étape 46 sinon elle applique l'étape 47.

A l'étape 46, la logique de commande produit un $n^{ème}$ signal $C_{n1}$, de préférence binaire, dont l'amplitude est égale à 1. A l'étape 47, le signal $C_{n1}$ a une amplitude nulle.

A partir du $n^{ème}$ signal $C_{n1}$ obtenu à l'étape 46 ou 47, la logique de commande détermine à l'étape 48, un $n^{ème}$ signal $R_n$ représentatif de la position du rotor.

Dès que les n signaux $R_1$, $R_2$, ......., $R_{n-1}$, $R_n$ représentatifs de la position du rotor, sont obtenus respectivement aux étapes 36, 40, 44 et 48 la logique de commande applique l'étape 49.

Dans cette étape 49, la logique de commande détermine la position du rotor en fonction des n signaux binaires $R_1$, $R_2$, ......., $R_{n-1}$, $R_n$ représentatifs de la position du rotor associés à des règles de calculs ou abaques contenus dans la mémoire de calcul. La logique de commande code en décimal les n signaux binaires $R_1$, $R_2$, ......., $R_{n-1}$, $R_n$ sur une période électrique de sorte que $R_1$ soit le plus faible bit et $R_n$ le plus fort bit. Par conséquent, la logique de commande caractérise la position du rotor par des niveaux pouvant aller de 1 à n ou de 1 à 2n selon la parité de n.

Lorsque n est impair, la logique de commande applique les étapes 50, 51 afin de calculer la précision de la position du rotor déterminée. Lorsque n est pair, la logique de commande applique les étapes 53-56 pour calculer la précision de la position du rotor déterminée.

A l'étape 51, la position du rotor est déterminée avec une précision égale à 360/2n degrés électriques.

Lorsque n est pair et que les enroulements du stator sont régulièrement répartis dans l'espace, alors la logique de commande calcule à l'étape 54 la précision de la position du rotor. Cette précision est égale à 360/n degrés électriques.

Lorsque n'est pair et que les enroulements du stator sont irrégulièrement répartis dans l'espace, alors la logique de commande calcule à l'étape 56 la précision de la position du rotor. Cette précision est égale à 360/2n degrés électriques.

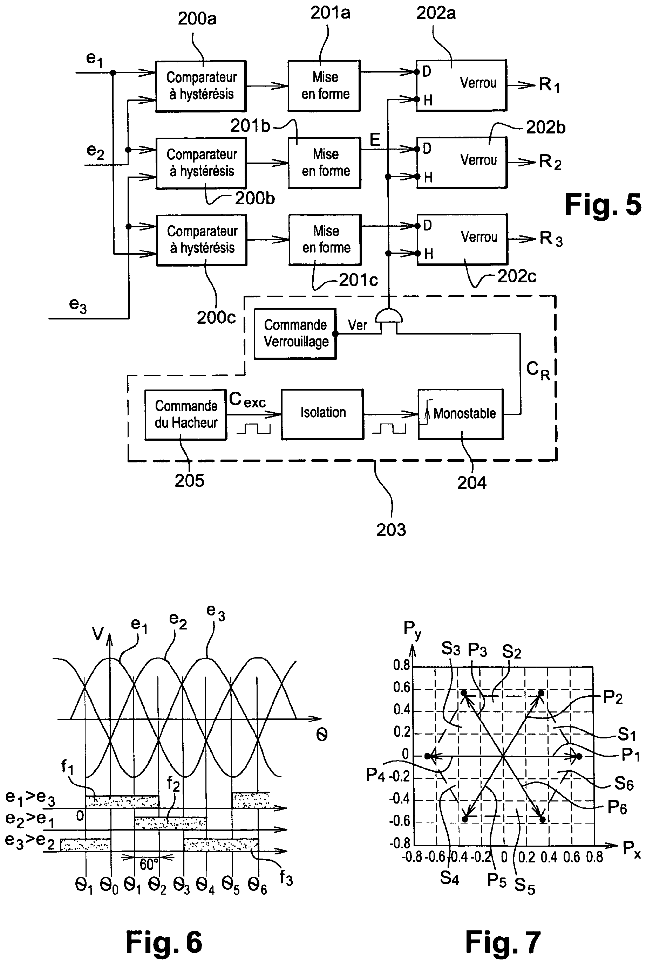

Ce premier mode de réalisation de l'invention, ci-dessus décrit, est illustré aux figures 5, 6 et 7, dans le cas d'une machine triphasée. Ce premier mode de réalisation permet d'obtenir le même résultat que les capteurs de position à effet hall ou optique de l'état de la technique pour une même machine triphasée.

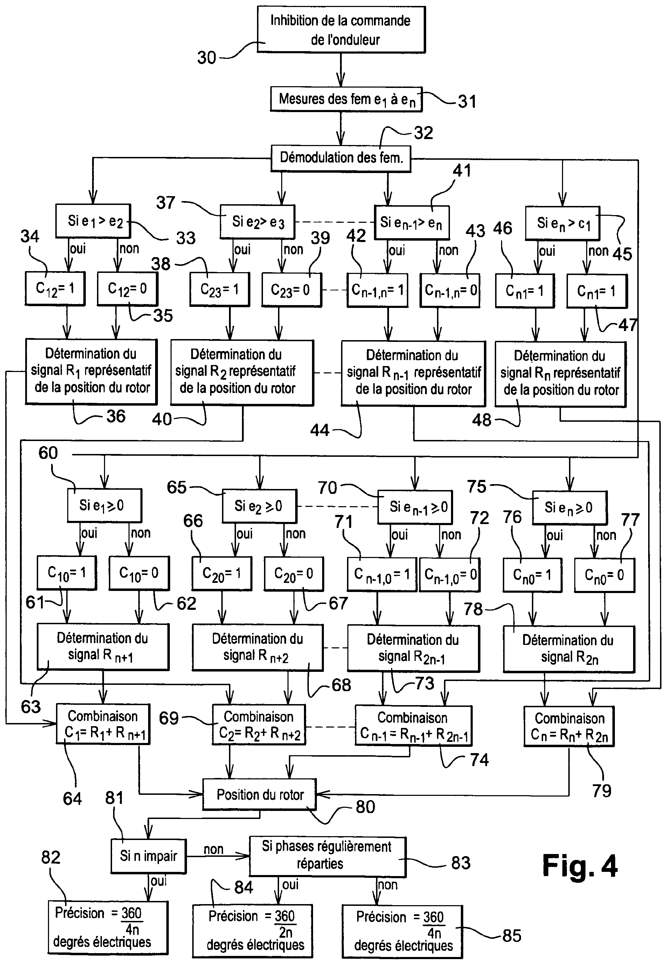

La figure 4 montre un procédé, selon l'invention, d'un deuxième mode de fonctionnement des moyens illustrés à la figure 1. La figure 4 comporte les mêmes étapes 30 à 48 de la figure 3.

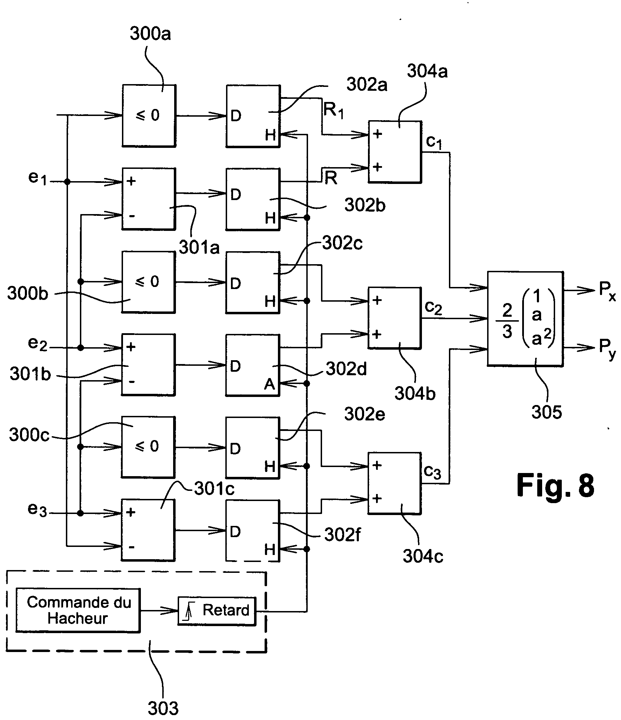

Les étapes 60 à 75 montrent les différentes étapes de comparaisons de chaque force électromotrice induite à un signal de référence. Dans un exemple préféré, ce signal de référence est un signal nul. Le fonctionnement de ces étapes de comparaisons 60 à 75 est illustré à la figure 8.

A l'étape 60, la logique de commande compare la première force électromotrice $e_1$ à un signal nul. Lorsque la première force électromotrice $e_1$ est supérieure au signal nul alors la logique de commande applique l'étape 61 sinon elle applique l'étape 62.

A l'étape 61, la logique de commande produit un $(n+1)^{ème}$ signal $C_{10}$, de préférence binaire, dont l'amplitude est égale à 1. A l'étape 62, le signal $C_{10}$, a une amplitude nulle.

A partir du $(n+1)^{ème}$ signal $C_{10}$ obtenue à l'étape 61 ou 62, la logique de commande détermine à l'étape 63, un $(n+1)^{ème}$ signal $R_{n+1}$ représentatif de la position du rotor.

A l'étape 64, la logique de commande effectue une première combinaison $C_1$ du premier signal $R_1$ et du $(n+1)^{ème}$ signal $R_{n+1}$ représentatif de la position du rotor. Cette combinaison peut être mise en oeuvre par une addition ou une soustraction. Dans un exemple préféré, cette combinaison est une addition.

A l'étape 65, la logique de commande compare la deuxième force électromotrice $e_2$ à un signal nul. Lorsque la deuxième force électromotrice $e_2$ est supérieure au signal nul alors la logique de commande applique l'étape 66 sinon elle applique l'étape 67.

A l'étape 66, la logique de commande produit un $(n+2)^{ème}$ signal $C_{20}$, de préférence binaire, dont l'amplitude est égale à 1. A l'étape 67, le signal $C_{20}$, a une amplitude nulle.

A partir du $(n+2)^{ème}$ signal $C_{20}$ obtenue à l'étape 66 ou 67, la logique de commande détermine à l'étape 68, un $(n+2)^{ème}$ signal $R_{n+2}$ représentatif de la position du rotor.

A l'étape 69, la logique de commande effectue une deuxième combinaison $C_2$ du deuxième signal $R_2$ et du $(n+2)^{ème}$ signal $R_{n+2}$ représentatif de la position du rotor.

Ainsi de suite jusqu'à la $n^{ème}$ force électromotrice en.

A l'étape 70, la logique de commande compare la $(n-1)^{ème}$ force électromotrice $e_{n-1}$ à un signal nul. Lorsque la $(n-1)^{ème}$ force électromotrice en-1 est supérieure au signal nul alors la logique de commande applique l'étape 71 sinon elle applique l'étape 72.

A l'étape 71, la logique de commande produit un $(2n-1)^{ème}$ signal $C_{(n-1)0}$, de préférence binaire, dont l'amplitude est égale à 1. A l'étape 72, le signal $C_{n-10}$ a une amplitude nulle.

A partir du $(2n-1)^{ème}$ signal $C_{n-10}$ obtenue à l'étape 71 ou 72, la logique de commande détermine à l'étape 73, un $(2n-1)^{ème}$ signal $R_{2n-1}$ représentatif de la position du rotor.

A l'étape 74, la logique de commande effectue une $(n-1)^{ème}$ combinaison $C_{n-1}$ du $(n-1)^{ème}$ signal $R_{n-1}$ et du $(2n-1)^{ème}$ signal $R_{2n-1}$ représentatif de la position du rotor.

A l'étape 75, la logique de commande compare la $n^{ème}$ force électromotrice en à un signal nul. Lorsque la $n^{ème}$ force électromotrice en est supérieure au signal nul alors la logique de commande applique l'étape 76 sinon elle applique l'étape 77.

A l'étape 76, la logique de commande produit un $(2n)^{ème}$ signal $C_{n0}$, de préférence binaire, dont l'amplitude est égale à 1. A l'étape 77, le signal $C_{n0}$, a une amplitude nulle.

A partir du $(2n)^{ème}$ signal $C_{n0}$ obtenue à l'étape 76 ou 77, la logique de commande détermine à l'étape 78, un $(2n)^{ème}$ signal $R_{2n}$ représentatif de la position du rotor.

A l'étape 79, la logique de commande effectue une $n^{ème}$ combinaison $C_n$ du $n^{ème}$ signal $R_n$ et du $(2n)^{ème}$ signal $R_{2n}$ représentatif de la position du rotor.

Dès l'obtention des n combinaisons $C_1$, $C_2$ ...... $C_{n-1}$ et $C_n$ des signaux représentatifs de la position du rotor, la logique de commande applique l'étape 80. Dans cette étape 80, la logique de commande détermine la position du rotor, en associant aux combinaisons $C_1$, $C_2$ ...... $C_{n-1}$ et $C_n$ les règles de calculs ou les abaques préalablement définis de la mémoire M.

Par conséquent, la logique de commande caractérise la position du rotor par des niveaux pouvant aller de 1 à 2n ou de 1 à 4n selon la parité de n.

A l'étape 81 si n est impair, la logique de commande applique l'étape 82 sinon elle applique l'étape 83. A l'étape 81, la précision de la position du rotor déterminée est égale à 360/4n degrés électriques. A l'étape 83, comme n est pair, la logique de commande détermine si les n enroulements du stator sont répartis de manière régulière dans l'espace. Si c'est le cas, elle calcule à l'étape 84 la précision de la position du rotor déterminée qui est égale à 360/2n degrés électriques. Sinon, elle détermine à l'étape 85 la position du rotor avec une précision de 360/4n degrés électriques.

Ce deuxième mode de réalisation de l'invention, ci-dessus décrit, est illustré aux figures 8, 9 et 10. Ce deuxième mode de réalisation permet d'affiner la résolution de la position du rotor sans pour autant augmenter le coût.

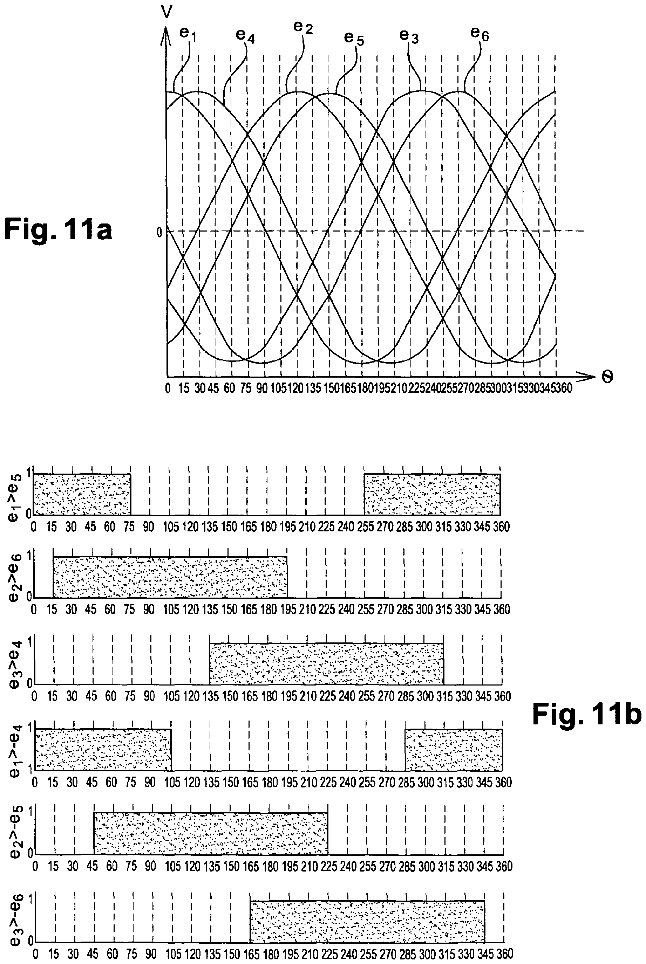

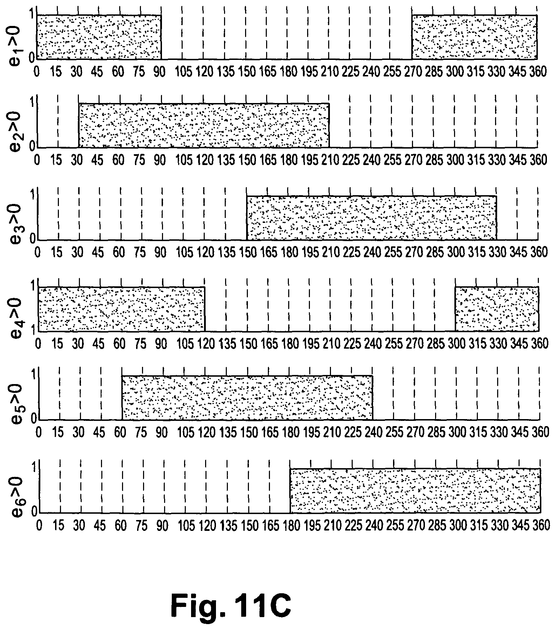

Un troisième mode de réalisation de l'invention est décrit aux figures 11 et 12.

La figure 5 montre des moyens mettant en oeuvre le procédé du premier mode de réalisation de l'invention, de la figure 3. Dans l'exemple de la figure 5, n est égale à 3. La machine électrique est une machine triphasée. Après une éventuelle amplification, les forces électromotrices induites sont comparées entre elles pour aboutir à trois signaux rectangulaires de même fréquence.

Pour réaliser cette comparaison, les forces électromotrices sont envoyées deux à deux à un comparateur à hystérésis 200a. La logique de commande comporte autant de comparateurs à hystérésis 200a qu'il y a de comparaisons à effectuer. Ce comparateur à hystérésis est de préférence un ampli opérationnel fonctionnant en régime de commutation. L'état de sortie du comparateur définit si une force électromotrice est supérieure ou inférieure à une autre force électromotrice.

Le premier comparateur à hystérésis 200a compare la première force électromotrice $e_1$ à la deuxième force électromotrice $e_2$. Le deuxième comparateur à hystérésis 200b compare la deuxième force électromotrice $e_2$ à la troisième force électromotrice $e_3$. Le troisième comparateur à hystérésis 200c compare la troisième force électromotrice $e_3$ à la première force électromotrice $e_1$.

Le signal de sortie de chaque comparateur 200a, 200b et 200c est envoyé respectivement vers un circuit de mise en forme 201a, 201b et 201c. Ces circuits de mise en forme 201a, 201b et 201c permettent d'adapter le signal de sortie des comparateurs afin qu'il puisse être correctement interprété par l'entrée d'une bascule.

Dans l'exemple de la figure 5, les circuits de mise en forme 201a, 201b et 201c produisent chacun un signal binaire possédant un état haut et un état bas, à partir du signal de sortie des comparateurs à hystérésis. Ainsi les circuits de mise en forme 201a, 201b et 201c fournissent à la sortie trois signaux rectangulaires de même fréquence.

Le signal binaire délivré par chaque circuit de mise en forme 201a, 201b et 201c est respectivement envoyé vers des bascules 202a, 202b et 202c. Les bascules 202a, 202b et 202c sont des portes séquentielles permettant le stockage d'un bit. Ainsi, l'état de la sortie de ces bascules dépend de ses entrées mais également de la valeur qu'elle contient. Dans un mode de réalisation, ces bascules sont des bascules D. Ils peuvent être également tout autre circuit permettant de réaliser une fonction de mémorisation.

La bascule D comporte deux entrées, une entrée D correspondant au signal produit par le circuit de mise en forme et une entrée H correspondant à un signal d'horloge fournie par un bloc 203. Ce signal d'horloge est élaboré à partir d'un retard sur les fronts montants de la commande du hacheur. La bascule D comporte une sortie fournissant les signaux représentatifs de la position du rotor. A chaque front montant d'horloge, la sortie recopie la valeur de l'entrée D, et à chaque front descendant d'horloge, la valeur de l'entrée recopiée est mémorisée, dans ce cas la bascule est verrouillée. La bascule D permet ainsi d'obtenir les signaux représentatifs de la position du rotor par synchronisation d'un retard aux fronts montant du signal de commande du hacheur.

Dans une variante, un signal Reset peut être mis en place afin d'initialiser une valeur initiale de la bascule, lors de la mise sous tension.

Le bloc 203 permet de fournir le signal d'horloge aux bascules 202a, 202b et 202c. Pour ce faire, le bloc 203 comporte un monostable 204. Le monostable 204 est une bascule comportant un état stable et un état instable. Il peut passer de l'un à l'autre de ces états sous l'action d'une commande du hacheur 205. Le monostable 205 est utilisé pour faire des temporisations.

Avec ce signal d'horloge, les signaux issus de la comparaison sont synchrones au signal d'excitation et périodiques à la fréquence de découpage. En vue de l'extraction d'une information utile sur la position du rotor, la logique de commande prélève les amplitudes des signaux issus des circuits de mise en forme à des instants légèrement retardés par rapport aux fronts montants du signal d'excitation. Le résultat de ce prélèvement conduit à l'élaboration des trois signaux $R_1$, $R_2$ et $R_3$ représentatifs de la position du rotor à des intervalles de 360/(2x3) degrés électriques égale à 60° électriques.

La figure 6 montre dans un graphe l'allure des trois forces électromotrices démodulées ainsi que l'allure des résultats des comparaisons entre elles. L'ordonnée représente l'amplitude en volt du signal. L'abscisse représente la position angulaire du rotor. La courbe e1 montre l'allure de la première force électromotrice $e_1$ démodulée. La courbe e2 montre l'allure de la deuxième force électromotrice $e_2$ démodulée et déphasée de $2\Pi/3$ par rapport à la courbe de la première force électromotrice $e_1$ démodulée. La courbe e3 montre l'allure de la troisième force électromotrice $e_3$ démodulée et déphasée $2\Pi/3$ par rapport à la courbe de la deuxième force électromotrice $e_2$ démodulée.

La figure 6 montre également les représentations binaires des résultats de la comparaison deux à deux des forces électromotrices. La courbe f1 représente le résultat binaire de la comparaison des courbes e1 et e3. La courbe f2 représente le résultat binaire de la comparaison des courbes e2 et e1. La courbe f3 représente le résultat binaire de la comparaison des courbes e3 et e2. Le résultat binaire comporte un état haut égal à 1 et un état bas égal à 0.

Dans l'intervalle -θ1 à θ0, la courbe e1 étant supérieure à la courbe e3 entraîne que la courbe f1 est à l'état haut. La courbe e2 étant inférieure à la courbe e1 entraîne que la courbe f2 est à l'état bas. La courbe e3 étant supérieure à la courbe e2 entraîne que la courbe f3 est à l'état haut. Dans ce cas, le premier signal $R_1$ est à l'état haut, le deuxième signal $R_2$ est à l'état bas de même que le troisième signal $R_3$.

Dans l'intervalle θ0 à θ1, la courbe e3 devient inférieure à la courbe e2 entraînant un changement d'état de la courbe f3. La courbe f3 passe à l'état bas. Dans ce cas, le premier signal $R_1$ est à l'état haut de même que le deuxième signal $R_2$ et le troisième signal $R_3$ est à l'état bas.

Dans l'intervalle θ1 à θ2, la courbe e2 devient supérieure à la courbe e1 entraînant un changement d'état de la courbe f2. La courbe f2 passe à l'état haut. Dans ce cas, le premier signal $R_1$ est à l'état bas de même que le troisième signal $R_3$, le deuxième signal $R_2$ est à l'état haut.

Dans l'intervalle θ2 à θ3, la courbe e1 devient inférieure à la courbe e3 entraînant un changement d'état de la courbe f1. La courbe f1 passe à l'état bas. Dans ce cas, le premier signal $R_1$ est à l'état bas, le deuxième signal $R_2$ est à l'état haut de même que le troisième signal $R_3$.

Dans l'intervalle θ3 à θ4, la courbe e3 devient supérieure à la courbe e2 entraînant un changement d'état de la courbe f3. La courbe f3 passe à l'état haut. Dans ce cas, le premier signal $R_1$ est à l'état bas de même que le deuxième signal $R_2$ et le troisième signal $R_3$ est à l'état haut.

Dans l'intervalle θ4 à θ5, la courbe e2 devient inférieure à la courbe e1 entraînant un changement d'état de la courbe f2. La courbe f2 passe à l'état bas. Dans ce cas, le premier signal $R_1$ est à l'état haut de même que le troisième signal $R_3$, le deuxième signal $R_2$ est à l'état bas.

Dans l'intervalle θ5 à θ6, la courbe e1 devient supérieure à la courbe e3 entraînant un changement d'état de la courbe f1. La courbe f1 passe à l'état haut. Dans ce cas, le premier signal $R_1$ est à l'état haut, le deuxième signal $R_2$ est à l'état bas de même que le troisième signal $R_3$.

Dans l'intervalle θ6 à θ7, la courbe e3 devient inférieure à la courbe e2 entraînant un changement d'état de la courbe f3. La courbe f3 passe à l'état bas. Dans ce cas, le premier signal $R_1$ est à l'état haut de même que le deuxième signal $R_2$ et le troisième signal $R_3$ est à l'état bas.

Les résultats de ces comparaisons sont déphasés de 360/(2x3) degrés électriques. Ces résultats sont alors obtenus avec une précision de 60 degrés électriques. Physiquement, il n'est pas possible d'obtenir à la fois les trois signaux $R_1$, $R_2$ et $R_3$ représentatif de la position du rotor à l'état haut ou à l'état bas.

La figure 7 montre la position d'un vecteur position du rotor élaboré à partir des trois signaux $R_1$, $R_2$ et $R_3$ représentatifs de la position du rotor. Ce vecteur position est obtenu selon la relation suivante :

$$\overrightarrow{P(\theta)} = \frac{2}{3}\left\{R_1 + aR_2 + a^2R_3\right\}$$

où

$$a = e^{j\frac{2\pi}{3}}$$

Ce vecteur position est représenté en ordonnée par la composante $p_y$ et en abscisse par la composante $p_x$. Il occupe successivement les six sommets d'un hexagone à des intervalles angulaires réguliers de 60° électriques. Sur la machine comportant un rotor bipolaire, les différents vecteurs de position $\overrightarrow{P1}$ à $\overrightarrow{P6}$ mettent en évidence six secteurs S1 à S6 angulaires représentatifs des différentes comparaisons possibles entre les forces électromotrices induites par l'excitation du bobinage rotorique.

Chaque secteur angulaire a son sommet au centre de l'hexagone et fait un angle de 60° électrique. Chacun des vecteurs de position forme avec le vecteur de position consécutif un secteur angulaire. Le premier secteur angulaire S1 est formé par les vecteurs de position $\overrightarrow{P1}$ et $\overrightarrow{P2}$ ainsi de suite jusqu'au sixième secteur angulaire S6 qui est formé par les vecteurs de position $\overrightarrow{P6}$ et $\overrightarrow{P1}$.

La figure 8 montre des moyens mettant en oeuvre le procédé du deuxième mode de réalisation de l'invention, de la figure 4, pour la même machine triphasée que dans les exemples des figures 5, 6 et 7. La figure 8 montre un schéma synoptique de la comparaison des forces électromotrices entres elles ainsi que le passage de ces forces électromotrices à zéro.

La logique de commande effectue comme dans le premier mode de réalisation une première comparaison correspondante à la comparaison de chaque force électromotrice à une autre force électromotrice. Cette première comparaison est effectuée par des comparateurs 301a, 301b et 301c.

La logique de commande effectue une deuxième comparaison correspondante à la comparaison de chaque force électromotrice à un signal nul. Cette deuxième comparaison est effectuée par des comparateurs 300a, 300b et 300c.

Le comparateur 300a compare la première force électromotrice $e_1$ à un signal nul. Le comparateur 300b compare la deuxième force électromotrice $e_2$ à un signal nul. Le comparateur 300c compare la troisième force électromotrice $e_3$ à un signal nul. Le comparateur 301a compare la première force électromotrice $e_1$ à la deuxième force électromotrice $e_2$. Le comparateur 301b compare la deuxième force électromotrice $e_2$ à la troisième force électromotrice $e_3$. Le comparateur 301c compare la troisième force électromotrice $e_3$ à la première force électromotrice $e_1$.

La sortie de chaque comparateur est envoyée vers une bascule, de préférence bascule D, dont le signal d'horloge est fourni par un bloc 303. La bascule 302a reçoit le résultat de la comparaison du comparateur 300a et fournit un quatrième signal $R_4$ représentatif de la position du rotor. La bascule 302b reçoit le résultat de la comparaison du comparateur 301a et fournit le premier signal $R_1$ représentatif de la position du rotor.

La bascule 302c reçoit le résultat de la comparaison du comparateur 300b et fournit un cinquième signal $R_5$ représentatif de la position du rotor. La bascule 302d reçoit le résultat de la comparaison du comparateur 301b et fournit le deuxième signal $R_2$ représentatif de la position du rotor.

La bascule 302e reçoit le résultat de la comparaison du comparateur 300c et fournit un sixième signal $R_6$ représentatif de la position du rotor. La bascule 302f reçoit le résultat de la comparaison du comparateur 301c et fournit le troisième signal $R_3$ représentatif de la position du rotor.

En d'autres termes, les bascules ayant comme entrée le résultat de comparaison des forces électromotrices entre elles fournissent trois signaux $R_1$, $R_2$ et $R_3$ représentatifs de la position du rotor. Les bascules ayant comme entrée le résultat de comparaison de chaque force électromotrice au signal nul fournissent trois autres signaux $R_4$, $R_5$ et $R_6$ représentatifs de la position du rotor.

Pour tirer profit du déphasage entre les signaux $R_1$, $R_2$, $R_3$ et $R_4$, $R_5$, $R_6$ la logique de commande combine ces signaux. Cette combinaison est de préférence réalisée par un additionneur. L'additionneur 304a reçoit le premier signal $R_1$ et le quatrième signal $R_4$ représentatifs de la position du rotor, et fournit en sortie une première combinaison $C_1$. L'additionneur 304b reçoit le deuxième signal $R_2$ et le cinquième signal $R_5$ représentatifs de la position du rotor, et fournit en sortie une deuxième combinaison $C_2$. L'additionneur 304c reçoit le troisième signal $R_3$ et le sixième signal $R_6$ représentatifs de la position du rotor, et fournit en sortie une troisième combinaison $C_3$. Ces trois signaux de combinaisons $C_1$, $C_2$ et $C_3$ sont transmis à un calculateur 305. Ce calculateur 305 détermine le vecteur position du rotor à partir des abaques ou des règles de calculs contenus dans la mémoire de calcul M. Il fournit en sortie les composantes $p_y$ et $p_x$ du vecteur position du rotor.

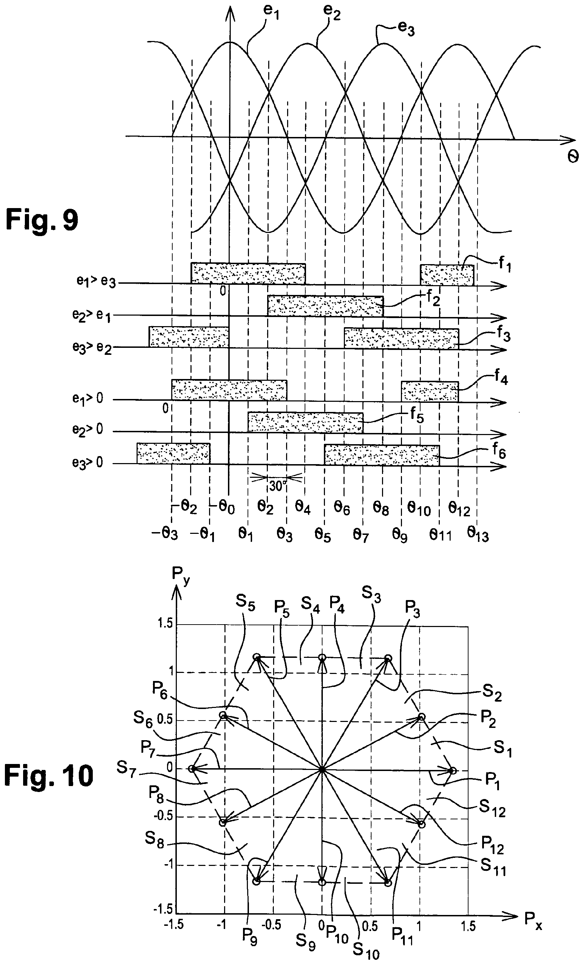

La figure 9 montre dans un graphe l'allure des courbes des trois forces électromotrices démodulées ainsi que le résultat de la comparaison des courbes deux à deux et le résultat de la comparaison de chaque courbe avec le signal nul.

Les trois courbes e1, e2 et e3 des trois forces électromotrices $e_1$, $e_2$ et $e_3$ sont les mêmes que celles représentées dans la figure 6. De même, les trois courbes f1, f2 et f3 représentent les mêmes résultats de comparaison que ceux présentées à la figure 6. La courbe f4 représente le résultat binaire de la comparaison de la courbe e1 à un signal nul. La courbe f5 représente le résultat binaire de la comparaison de la courbe e2 à un signal nul. La courbe f6 représente le résultat binaire de la comparaison de la courbe e3 à un signal nul.

Dans l'intervalle -θ3 à -θ2, la courbe e1 étant inférieure à la courbe e3 entraîne que la courbe f1 est à l'état bas. La courbe e2 étant inférieure à la courbe e1 entraîne que la courbe f2 est à l'état bas. La courbe e3 étant supérieure à la courbe e2 entraîne que la courbe f3 est à l'état haut. La courbe e1 étant positif entraîne que la courbe f4 est à l'état haut. La courbe e2 étant négatif entraîne que la courbe f5 est à l'état bas. La courbe e3 étant positif entraîne que la courbe f6 est à l'état haut.

Dans l'intervalle -θ2 à -θ1, la courbe e1 devient supérieure à la courbe e3 entraînant un changement d'état de la courbe f1. La courbe f1 passe à l'état haut.

Dans l'intervalle -θ1 à θ0, la courbe e3 devient négative entraînant un changement d'état de la courbe f6. La courbe f6 passe à l'état bas.

Dans l'intervalle θ0 à θ1, la courbe e3 devient inférieure à la courbe e2 entraînant un changement d'état de la courbe f3. La courbe f3 passe à l'état bas.

Dans l'intervalle θ1 à θ2, la courbe e2 devient positive entraînant un changement d'état de la courbe f5. La courbe f5 passe à l'état haut.

Dans l'intervalle θ2 à θ3, la courbe e2 devient supérieure à la courbe e1 entraînant un changement d'état de la courbe f2. La courbe f2 passe à l'état haut.

Dans l'intervalle θ3 à θ4, la courbe e1 devient négative entraînant un changement d'état de la courbe f4. La courbe f4 passe à l'état bas.

Dans l'intervalle θ4 à θ5, la courbe e1 devient inférieure à la courbe e3 entraînant un changement d'état de la courbe f1. La courbe f1 passe à l'état bas.

Dans l'intervalle θ5 à θ6, la courbe e3 devient positive entraînant un changement d'état de la courbe f6. La courbe f6 passe à l'état haut.

Dans l'intervalle θ6 à θ7, la courbe e3 devient supérieure à la courbe e2 entraînant un changement d'état de la courbe f3. La courbe f3 passe à l'état haut.

Dans l'intervalle θ7 à θ8, la courbe e2 devient négative entraînant un changement d'état de la courbe f5. La courbe f5 passe à l'état bas.

Dans l'intervalle θ8 à θ9, la courbe e2 devient inférieure à la courbe e1 entraînant un changement d'état de la courbe f2. La courbe f2 passe à l'état bas.

Dans l'intervalle θ9 à θ10, la courbe e1 devient positive entraînant un changement d'état de la courbe f4. La courbe f4 passe à l'état haut.

Dans l'intervalle θ10 à θ11, la courbe e1 devient supérieure à la courbe e3 entraînant un changement d'état de la courbe f1. La courbe f1 passe à l'état haut.

Dans l'intervalle θ11 à θ12, la courbe e3 devient négative entraînant un changement d'état de la courbe f6. La courbe f6 passe à l'état bas.

Dans l'intervalle θ12 à θ13, la courbe e3 devient inférieure à la courbe e2 entraînant un changement d'état de la courbe f3. La courbe f3 passe à l'état bas.

Les résultats de ces comparaisons sont déphasés de 30 degrés électriques qui est égale à 360/(4x3) degrés électriques.

La figure 9 montre la position d'un vecteur position du rotor élaboré à partir des trois combinaisons $C_1$, $C_2$ et $C_3$ respectivement des six signaux $R_1 + R_{n+1}$, $R_2 + R_{n+2}$ et $R_3 + R_{n+3}$ représentatifs de la position du rotor. Ce vecteur position est obtenu selon la relation suivante :

$$\overrightarrow{P(\theta)} = \frac{2}{3}\left\{ C_1 + aC_2 + a^2C_3 \right\}$$

où

$$a = e^{j\frac{2\pi}{3}}$$

Les composantes $p_x$ et $p_y$ de ce vecteur position sont données par :

$$\begin{cases} p_x = \dfrac{2}{3}\left( c_1 - \dfrac{c_2 + c_3}{2} \right) \\ p_y = \dfrac{1}{\sqrt{3}}\left( c_2 - c_3 \right) \end{cases}$$

La figure 10 montre les douze positions angulairement distantes de 30° électriques et successivement occupées par le vecteur de position. Les différents vecteurs de position $\overrightarrow{P1}$ à $\overrightarrow{P2}$ du rotor mettent en évidence douze secteurs S1 à S12 angulaires représentatifs des différentes comparaisons possibles entre les forces électromotrices induites par l'excitation du bobinage rotorique ainsi que la comparaison de chaque force électromotrice avec le signal nul.

Le premier secteur angulaire S1 est formé par les vecteurs de position $\overrightarrow{P1}$ et $\overrightarrow{P2}$ ainsi de suite jusqu'au douzième secteur angulaire S12 qui est formé par les vecteurs de position $\overrightarrow{P12}$ et $\overrightarrow{P1}$. Dans un exemple, le vecteur position du rotor se situe dans le premier secteur S1 lorsque :

- la première force électromotrice $e_1$ est supérieure à la troisième force électromotrice $e_3$,
- la deuxième force électromotrice $e_2$ est supérieure à la première force électromotrice $e_1$, et
- la première force électromotrice $e_1$ est positive, la deuxième force électromotrice $e_2$ est négative et la troisième force électromotrice $e_3$ est positive. La détection de la position du rotor est donc deux fois plus précise quand l'information sur les changements de signes des forces électromotrices induites est exploitée. La localisation du rotor se fait à ±15° électriques de sa position réelle. Ceci permet de définir douze secteurs angulaires du vecteur position sur une machine bipolaire.

Les exemples des moyens ci-dessus décrits mettant en oeuvre le procédé de l'invention peuvent être appliqués aux machines comportant un nombre pair de phases. Dans le cas d'une machine comportant un nombre pair d'enroulements du stator, la logique de commande calcule la précision de la position du rotor en fonction de la répartition des phases dans l'espace.

La figure 11a montre l'allure des courbes des forces électromotrices des 6 enroulements statoriques irrégulièrement répartis. Les 6 enroulements statoriques peuvent être répartis en deux sous-groupes. Dans ce cas, ils sont répartis en deux doubles triphasés.

Dans ce cas, on répartit régulièrement les 3 premiers enroulements à 360/n degrés électriques les uns des autres, égale ici à 60 degrés électriques. Puis, on répartit les 3 derniers enroulements du stator à 360/2n degrés électriques, égale ici à 30 degrés électriques, des 3 premiers enroulements. Autrement dit, le premier enroulement du deuxième groupe est déphasé de 30 degrés électriques par rapport au premier enroulement du premier groupe. Et ainsi de suite.

La figure 11b montre l'étape de comparaison du premier mode de réalisation de l'invention, dans le cas d'une machine comportant 6 phases irrégulièrement réparties. Cette étape de comparaison, dans l'exemple de la figure 11b, utilise la comparaison d'une force électromotrice avec une autre ainsi que la comparaison d'une force électromotrice avec l'opposée d'une autre. La précision de la position du rotor est égale à 30 degrés électriques avec le premier mode de réalisation de l'invention.

La figure 11c montre l'étape de comparaison des forces électromotrices avec un signal nul du deuxième mode de réalisation de l'invention.

Le deuxième mode de réalisation de l'invention combine les résultats obtenus à la figure 11b ainsi que les résultats obtenus à la figure 11c. La précision obtenue avec cette combinaison est de 15 degrés électriques. On obtient avec ce type de répartition la même précision que lorsque n est impair.

Lorsque les 6 enroulements du stator sont régulièrement répartis dans l'espace, alors la précision de la position du rotor est égale à 60 degrés électriques, avec le premier procédé de l'invention. Cette précision est de 30 degrés électriques pour le deuxième procédé de l'invention. Avec ce type de répartition des enroulements du stator la précision sur la position du rotor est deux fois moins bonne que lorsque n est pair et irrégulièrement répartis.

**Revendications**

1. Procédé de détermination de la position d'un rotor (4) d'une machine (1), le rotor étant muni d'au moins un enroulement d'excitation (25), l'enroulement d'excitation étant connecté à un hacheur (6), la machine comportant n enroulements statoriques, n étant un nombre entier, le rotor étant couplé magnétiquement avec chacun des n enroulements statoriques de la machine, cette machine étant connectée à un dispositif de pilotage (2) apte à la piloter en pleine onde ou en modulation de largeur d'impulsions,
**caractérisé en ce que** le procédé comporte les étapes suivantes :

 - inhibition du dispositif de pilotage,
 - application d'une tension d'excitation variable dans le temps sur le rotor, au moyen du hacheur,
 - mesure d'une force électromotrice induite ($e_1$, $e_2$ ou $e_n$) dans chacun des enroulements statoriques,
 - détermination d'une position du rotor à l'arrêt ou à faible vitesse, à partir d'au moins une opération de comparaison entre les forces électromotrices induites et d'au moins une opération de comparaison d'une force électromotrice induite et d'une référence commune,
 - mise en oeuvre des commandes du dispositif de pilotage, selon la position déterminée du rotor.

2. Procédé selon la revendication 1, **caractérisé en ce que** la détermination de la position du rotor comporte l'étape suivante :

 - démodulation synchrone des forces électromotrices mesurées.

3. Procédé selon l'une quelconque des revendications 1 à 2, **caractérisé en ce que** le procédé comporte également l'étape de comparaison d'une force électromotrice induite avec l'opposée d'une autre force électromotrice induite.

4. Procédé selon la revendication 3, **caractérisé en ce que**

 - lorsqu'une première force électromotrice ($e_1$) du premier enroulement statorique est supérieure à une deuxième force électromotrice ($e_2$) du deuxième enroulement statorique, alors on produit un premier signal ($C_{1.2}$) égal à 1, sinon le premier signal ($C_{1.2}$) est égal à 0,
 - lorsque la deuxième force électromotrice ($e_2$) du deuxième enroulement statorique est supérieure à une troisième force électromotrice $e_3$ du troisième enroulement statorique, alors on produit un deuxième signal ($C_{2.3}$) égal à 1, sinon le deuxième signal ($C_{2.3}$) est égal à 0,
 - lorsqu'une $(n-1)^{ème}$ force électromotrice ($e_{(n-1)}$) du $_{(n-1)}^{ème}$ enroulement statorique est supérieure à une dernière force électromotrice en du $(n)^{ème}$ enroulement statorique alors on produit un $(n-1)^{ème}$ signal ($C_{(n-1).(n)}$) égal à 1, sinon le $(n-1)^{ème}$ signal ($C_{(n-1).(n)}$) est égal à 0,
 - lorsque la dernière force électromotrice ($e_n$) du $(n)^{ème}$ enroulement statorique est supérieure à la première force électromotrice ($e_1$) du premier enroulement statorique alors on produit un $n^{ème}$ signal ($C_{n.1}$) égal à 1, sinon le $n^{ème}$ signal ($C_{n.1}$) est égal à 0,
 - détermination de la position du rotor à partir de la valeur des n signaux ($C_{1.2}$, $C_{2.3}$, ....... $C_{(n-i)(n)}$ et $C_{n.1}$) représentatifs de la position du rotor, selon des règles prédéfinies.

5. Procédé selon l'une quelconque des revendications 3 à 4, **caractérisé en ce que** le procédé comporte, dans le cas où n est impair et/ou les n enroulements statoriques sont répartis de manière régulière, l'étape suivante

- détermination de la position du rotor avec une précision de 360/2n degrés électriques.

6. Procédé selon l'une quelconque des revendications 3 à 4, **caractérisé en ce que** le procédé comporte, dans le cas où n est pair et/ou les n enroulements statoriques sont répartis de manière régulière, l'étape suivante :

- détermination de la position du rotor avec une précision de 360/n degrés électriques.

7. Procédé selon l'une quelconque des revendications 3 à 4, **caractérisé en ce que** le procédé comporte, dans le cas où n est pair et/ou les n/2 enroulements forment un premier système d'enroulements régulièrement répartis, les n/2 autres enroulements forment un second système d'enroulements régulièrement répartis, les deux systèmes étant déphasés de 360/(2n) degrés électriques, l'étape suivante :

- détermination de la position du rotor avec une précision de 360/2n degrés électriques.

8. Procédé selon l'une quelconque des revendications 3 à 4, **caractérisé en ce que** le procédé comporte aussi les étapes suivantes :

- comparaison de chaque force électromotrice avec un signal de référence,
- lorsque la première force électromotrice ($e_1$) du premier enroulement statorique est supérieure au signal de référence, alors on produit un $(n+1)^{ème}$ signal ($C_{10}$) égale à 1, sinon le $(n+1)^{ème}$ signal ($C_{10}$) est égal à 0,
- lorsque la deuxième force électromotrice ($e_2$) du deuxième enroulement statorique est supérieure au signal de référence, alors on produit un $(n+2)^{ème}$ signal ($C_{20}$) égal à 1, sinon le $(n+2)^{ème}$ signal ($C_{20}$) est égal à 0,
- lorsque la $(n)^{ème}$ force électromotrice ($e_n$) du dernier enroulement statorique est supérieure au signal de référence, alors on produit un $(2n)^{ème}$ signal ($C_{n0}$) égal à 1, sinon le $(2n)^{ème}$ signal ($C_{n0}$) est égal à 0,
- détermination de la position du rotor à partir de la valeur des 2n signaux ($C_{1.2}$, $C_{2.3}$, ......, $C_{(n-1).(n)}$, $C_{n.1}$, $C_{10}$, $C_{20}$, ........ et $C_{n0}$) représentatifs de la position du rotor, selon des règles prédéfinies.

9. Procédé selon la revendication 8, **caractérisé en ce que** le procédé comporte, dans le cas où n est impair et/ou les n enroulements statoriques sont répartis de manière régulière, l'étape suivante :

- détermination de la position du rotor avec une précision de 360/4n degrés électriques.

10. Procédé selon la revendication 8, **caractérisé en ce que** le procédé comporte, dans le cas où n est pair et/ou les n enroulements statoriques sont répartis de manière régulière, l'étape suivante :

- détermination de la position du rotor avec une précision de 360/2n degrés électriques.

11. Procédé selon la revendication 8, **caractérisé en ce que** le procédé comporte, dans le cas où n est pair et/ou les n/2 enroulements forment un premier système d'enroulements régulièrement répartis, les n/2 autres enroulements forment un second système d'enroulements régulièrement répartis, les deux systèmes étant déphasés de 360/(2n) degrés électriques, l'étape suivante :

- détermination de la position du rotor avec une précision de 360/4n degrés électriques.

12. Procédé selon l'une quelconque des revendications 1 à 11, **caractérisé en ce que**

- les 2n signaux ($C_{1.2}$, $C_{2.3}$,......, $C_{(n-1).(n)}$, $C_{n.1}$, $C_{10}$, $C_{20}$,......., et $C_{n0}$) sont rectangulaires et de même fréquence,
- ils sont obtenus par une démodulation synchrone, cette démodulation synchrone étant une synchronisation définie par un retard relativement à un front montant de la commande du hacheur.

13. Procédé selon l'une quelconque des revendications 1 à 12, **caractérisé en ce que** le procédé comporte l'étape suivante :

- détermination de la position du rotor, lorsque la machine est à l'arrêt.

14. Dispositif pour la mise en oeuvre d'un procédé de détermination de la position d'un rotor d'une machine, comportant une machine électrique reliée à un dispositif de pilotage, ledit dispositif de pilotage étant connecté à une logique de commande, la logique de commande mettant en oeuvre ledit procédé et fournissant une position du rotor, et ladite machine comportant un rotor muni d'au moins un enroulement d'excitation alimenté en tension variable dans le temps par un hacheur dont le rapport cyclique appartient à l'intervalle [0.01, 0.99], le dispositif comportant

- des moyens d'inhibition du dispositif de pilotage,
- des moyens d'application d'une tension d'excitation variable dans le temps sur le rotor, au moyen du hacheur,
- des moyens de mesure d'une force électromotrice induite (e , e ou ..... e) dans chacun des enroulements statorique, 12n
- des moyens de détermination d'une position du rotor à l'arrêt ou à faible vitesse, à partir d'au moins une opération de comparaison entre les forces électromotrices induites et d'au moins une opération de comparaison d'une force électromotrice induite et d'une référence commune,
- des moyens de mise en oeuvre des commandes du dispositif de pilotage, selon la position déterminée du rotor.

**Patentansprüche**

1. Verfahren zur Bestimmung der Stellung eines Rotors (4) einer Maschine (1), wobei der Rotor mit mindestens einer Erregerwicklung (25) versehen ist, wobei die Erregerwicklung mit einem Zerhacker (6) verbunden ist, wobei die Maschine n Statorwicklungen aufweist, wobei n eine ganze Zahl ist, wobei der Rotor magnetisch mit jeder der n Statorwicklungen der Maschine gekoppelt ist, wobei diese Maschine mit einer Steuervorrichtung (2) verbunden ist, die sie im Vollwellenbetrieb oder in Impulsbreitenmodulation steuern kann, **dadurch gekennzeichnet, dass** das Verfahren die folgenden Schritte aufweist:

   - Hemmen der Steuervorrichtung,
   - Anlegen einer sich zeitlich ändernden Erregerspannung an den Rotor mittels des Zerhackers,
   - Messen einer induzierten elektromotorischen Kraft ($e_1$, $e_2$ oder ... $e_n$) in jeder der Statorwicklungen,
   - Bestimmen einer Stellung des stehenden oder langsam drehenden Rotors ausgehend von mindestens einem Vergleichsvorgang zwischen den induzierten elektromotorischen Kräften und mindestens einem Vergleichsvorgang einer induzierten elektromotorischen Kraft und einem gemeinsamen Bezug,
   - Durchführen der Steuerungen der Steuervorrichtung gemäß der bestimmten Stellung des Rotors.

2. Verfahren nach Anspruch 1, **dadurch gekennzeichnet, dass** die Bestimmung der Stellung des Rotors den folgenden Schritt aufweist:

   - synchrone Demodulation der gemessenen elektromotorischen Kräfte.

3. Verfahren nach einem der Ansprüche 1 bis 2, **dadurch gekennzeichnet, dass** das Verfahren ebenfalls den Schritt des Vergleichs einer induzierten elektromotorischen Kraft mit dem Gegenteil einer anderen induzierten elektromotorischen Kraft aufweist.

4. Verfahren nach Anspruch 3, **dadurch gekennzeichnet, dass**

   - wenn eine erste elektromotorische Kraft ($e_1$) der erstem Statorwicklung größer ist als eine zweite elektromotorische Kraft ($e_2$) der zweiten Statorwicklung, ein erstes Signal ($C_{1.2}$) gleich 1 erzeugt wird, sonst ist das erste Signal ($C_{1.2}$) gleich 0,
   - wenn die zweite elektromotorische Kraft ($e_2$) der zweiten Statorwicklung größer ist als eine dritte elektromotorische Kraft $e_3$ der dritten Statorwicklung, ein zweites Signal ($C_{2.3}$) gleich 1 erzeugt wird, sonst ist das zweite Signal ($C_{2.3}$) gleich 0,
   - wenn eine (n-1)-te elektromotorische Kraft ($e_{(n-1)}$) der (n-1)-ten Statorwicklung größer ist als eine letzte elektromotorische Kraft $e_n$ der (n)-ten Statorwicklung, ein (n-1)-tes Signal ($C_{(n-1).(n)}$) gleich 1 erzeugt wird, sonst ist das (n-1)-te Signal ($C_{(n-1).(n)}$) gleich 0,
   - wenn die letzte elektromotorische Kraft ($e_n$) der (n)-ten Statorwicklung größer ist als die erste elektromotorische Kraft ($e_1$) der ersten Statorwicklung, ein n-tes Signal ($C_{n.1}$) gleich 1 erzeugt wird, sonst ist das n-te Signal ($C_{n.1}$) gleich 0,
   - Bestimmen der Stellung des Rotors ausgehend vom Wert der n Signale ($C_{1.2}$, $C_{2.3}$, ..., $C_{(n-1).(n)}$ und $C_{n.1}$), die für die Stellung des Rotors repräsentativ sind, gemäß vordefinierten Regeln.

5. Verfahren nach einem der Ansprüche 3 bis 4, **dadurch gekennzeichnet, dass** das Verfahren in dem Fall, in dem n ungerade ist und/oder die n Statorwicklungen gleichmäßig verteilt sind, den folgenden Schritt aufweist

   - Bestimmen der Stellung des Rotors mit einer Präzision von 360/2n elektrischen Grad.

6. Verfahren nach einem der Ansprüche 3 bis 4, **dadurch gekennzeichnet, dass** das Verfahren in dem Fall, in dem n gerade ist und/oder die n Statorwicklungen gleichmäßig verteilt sind, den folgenden Schritt aufweist:

   - Bestimmen der Stellung des Rotors mit einer Präzision von 360/n elektrischen Grad.

7. Verfahren nach einem der Ansprüche 3 bis 4, **da-**

**durch gekennzeichnet, dass** das Verfahren in dem Fall, in dem n gerade ist und/oder die n/2 Wicklungen ein erstes System von gleichmäßig verteilten Wicklungen bilden, die n/2 anderen Wicklungen ein zweites System von gleichmäßig verteilten Wicklungen bilden, wobei die zwei Systeme um 360/(2n) elektrische Grad phasenverschoben sind, den folgenden Schritt aufweist:

- Bestimmen der Stellung des Rotors mit einer Präzision von 360/2n elektrischen Grad.

8. Verfahren nach einem der Ansprüche 3 bis 4, **dadurch gekennzeichnet, dass** das Verfahren auch die folgenden Schritte aufweist:

- Vergleichen jeder elektromotorischen Kraft mit einem Bezugssignal,
- wenn die erste elektromotorische Kraft ($e_1$) der ersten Statorwicklung größer ist als das Bezugssignal, wird ein (n+1)-tes Signal ($C_{10}$) gleich 1 erzeugt, sonst ist das (n+1)-te Signal ($C_{10}$) gleich 0,
- wenn die zweite elektromotorische Kraft ($e_2$) der zweiten Statorwicklung größer ist als das Bezugssignal, wird ein (n+2)-tes Signal ($C_{20}$) gleich 1 erzeugt, sonst ist das (n+2)-te Signal ($C_{20}$) gleich 0,
- wenn die (n)-te elektromotorische Kraft ($e_n$) der letzten Statorwicklung größer ist als das Bezugssignal, wird ein (2n)-tes Signal ($C_{n0}$) gleich 1 erzeugt, sonst ist das (2n)-te Signal ($C_{n0}$) gleich 0,
- Bestimmen der Stellung des Rotors ausgehend vom Wert der 2n Signale ($C_{1.2}$, $C_{2.3}$, $C_{(n-1).(n)}$, $C_{n.1}$, $C_{10}$, $C_{20}$, ..., und $C_{n0}$), die für die Stellung des Rotors repräsentativ sind, gemäß vordefinierten Regeln.

9. Verfahren nach Anspruch 8, **dadurch gekennzeichnet, dass** das Verfahren in dem Fall, in dem n ungerade ist und/oder die n Statorwicklungen gleichmäßig verteilt sind, den folgenden Schritt aufweist:

- Bestimmen der Stellung des Rotors mit einer Präzision von 360/4n elektrischen Grad.

10. Verfahren nach Anspruch 8, **dadurch gekennzeichnet, dass** das Verfahren in dem Fall, in dem n gerade und/oder die n Statorwicklungen gleichmäßig verteilt sind, den folgenden Schritt aufweist:

- Bestimmen der Stellung des Rotors, mit einer Präzision von 360/2n elektrischen Grad.

11. Verfahren nach Anspruch 8, **dadurch gekennzeichnet, dass** das Verfahren in dem Fall, in dem n gerade ist und/oder die n/2 Wicklungen ein erstes System von gleichmäßig verteilten Wicklungen formen, die n/2 anderen Wicklungen ein zweites System von gleichmäßig verteilten Wicklungen formen, wobei die zwei Systeme um 360/(2n) elektrische Grade phasenverschoben sind, den folgenden Schritt aufweist:

- Bestimmen der Stellung des Rotors mit einer Präzision von 360/4n elektrischen Grad.

12. Verfahren nach einem der Ansprüche 1 bis 11, **dadurch gekennzeichnet, dass**

- die 2n Signale ($C_{1.2}$, $C_{2.3}$, ..., $C_{(n-i).(n)}$, $C_{n.1}$, $C_{10}$, $C_{20}$, ..., und $C_{n0}$) rechteckig und von gleicher Frequenz sind,
- sie durch eine synchrone Demodulation erhalten werden, wobei diese synchrone Demodulation eine Synchronisation ist, durch die eine Verzögerung bezüglich einer ansteigenden Flanke der Steuerung des Zerhackers definiert wird.

13. Verfahren nach einem der Ansprüche 1 bis 12, **dadurch gekennzeichnet, dass** das Verfahren den folgenden Schritt aufweist:

- Bestimmen der Stellung des Rotors wenn die Maschine stillsteht.

14. Vorrichtung zur Durchführung eines Verfahrens zur Bestimmung der Stellung des Rotors einer Maschine, die eine mit einer Steuervorrichtung verbundene elektrische Maschine aufweist, wobei die Steuervorrichtung mit einer Steuerlogik verbunden ist, wobei die Steuerlogik das Verfahren durchführt und eine Stellung des Rotors liefert, und die Maschine einen Rotor aufweist, der mit mindestens einer Erregerwicklung versehen ist, die von einem Zerhacker mit einer sich zeitlich ändernden Spannung versorgt wird, dessen Tastverhältnis zum Zeitraum [0.01, 0.99] gehört, wobei die Vorrichtung aufweist

- Einrichtungen zum Hemmen der Steuervorrichtung,
- Einrichtungen zum Anlegen einer sich zeitlich ändernden Erregerspannung an den Rotor, mittels des Zerhackers,
- Einrichtungen zum Messen einer induzierten elektromotorischen Kraft ($e_1$, $e_2$ oder ... $e_n$) in jeder der Statorwicklungen,
- Einrichtungen zum Bestimmen einer Stellung des stehenden oder langsam drehenden Rotors ausgehend von mindestens einem Vorgang des Vergleichs zwischen den induzierten elektromotorischen Kräften und mindestens einem Vorgang des Vergleichs einer induzierten elektromotorischen Kraft und einem gemeinsamen Bezug,

- Einrichtungen zum Durchführen der Steuerungen der Steuervorrichtung gemäß der bestimmten Stellung des Rotors.

**Claims**

1. Method for determining the position of a rotor (4) of a machine (1), the rotor being equipped with at least one excitation winding (25), the excitation winding being connected to a chopper (6), the machine including n stator windings, n being an integer, the rotor being magnetically coupled to each of the n stator windings of the machine, this machine being connected to a driving device (2) able to drive it in a full-wave or pulse-width-modulation mode, **characterized in that** the method includes the following steps:

   - inhibiting the driving device;
   - applying an excitation voltage that varies over time to the rotor, by means of the chopper;
   - measuring an electromotive force ($e_1$, $e_2$ or ... $e_n$) induced in each of the stator windings;
   - determining a position of the rotor when it has stopped or is moving at low speed, via at least one operation of comparing the induced electromotive forces and at least one operation of comparing an induced electromotive force and a common reference; and
   - implementing commands of the driving device, depending on the determined position of the rotor.

2. Method according to Claim 1, **characterized in that** the determination of the position of the rotor includes the following step:

   - synchronously demodulating the measured electromotive forces.

3. Method according to either one of Claims 1 and 2, **characterized in that** the method also includes the step of comparing an induced electromotive force with the opposite of another induced electromotive force.

4. Method according to Claim 3, **characterized in that**

   - when a first electromotive force ($e_1$) of the first stator winding is higher than a second electromotive force ($e_2$) of the second stator winding, then a first signal ($C_{1.2}$) equal to 1 is produced, the first signal ($C_{1.2}$) otherwise being equal to 0;
   - when the second electromotive force ($e_2$) of the second stator winding is higher than a third electromotive force $e_3$ of the third stator winding, then a second signal ($C_{2.3}$) equal to 1 is produced, the second signal ($C_{2.3}$) otherwise being equal to 0;
   - when an $(n-1)^{th}$ electromotive force ($e_{(n-1)}$) of the $(n-1)^{th}$ stator winding is higher than a last electromotive force $e_n$ of the $(n)^{th}$ stator winding, then an $(n-1)^{th}$ signal ($C_{(n-1).(n)}$) equal to 1 is produced, the $(n-1)^{th}$ signal ($C_{(n-1).(n)}$) otherwise being equal to 0;
   - when the last electromotive force ($e_n$) of the $(n)^{th}$ stator winding is higher than the first electromotive force ($e_1$) of the first stator winding, then an $n^{th}$ signal ($C_{n.1}$) equal to 1 is produced, the $n^{th}$ signal ($C_{n.1}$) otherwise being equal to 0; and
   - the position of the rotor is determined on the basis of the value of the n signals ($C_{1.2}$, $C_{2.3}$,......,$C_{(n-1).(n)}$ and $C_{n.1}$) representative of the position of the rotor, according to predefined rules.

5. Method according to either one of Claims 3 and 4, **characterized in that** the method includes, in the case where n is odd and/or the n stator windings are regularly distributed, the following step:

   - determining the position of the rotor with a precision of 360/2n electrical degrees.

6. Method according to either one of Claims 3 and 4, **characterized in that** the method includes, in the case where n is even and/or the n stator windings are regularly distributed, the following step:

   - determining the position of the rotor with a precision of 360/n electrical degrees.

7. Method according to either one of Claims 3 and 4, **characterized in that** the method includes, in the case where n is even and/or the n/2 windings form a first system of regularly distributed windings, the n/2 other windings form a second system of regularly distributed windings and the two systems are out of phase by 360/(2n) electrical degrees, the following step:

   - determining the position of the rotor with a precision of 360/2n electrical degrees.

8. Method according to either one of Claims 3 and 4, **characterized in that** the method also includes the following steps:

   - comparing each electromotive force with a reference signal;
   - when a first electromotive force ($e_1$) of the first stator winding is higher than the reference signal, then an $(n+1)^{th}$ signal ($C_{10}$) equal to 1 is produced, the $(n+1)^{th}$ signal ($C_{10}$) otherwise be-

ing equal to 0;

- when the second electromotive force ($e_2$) of the second stator winding is higher than the reference signal, then an $(n+2)^{th}$ signal ($C_{20}$) equal to 1 is produced, the $(n+2)^{th}$ signal ($C_{20}$) otherwise being equal to 0;

- when the $(n)^{th}$ electromotive force ($e_n$) of the last stator winding is higher than the reference signal, then a $(2n)^{th}$ signal ($C_{n0}$) equal to 1 is produced, the $(2n)^{th}$ signal ($C_{n0}$) otherwise being equal to 0; and

- determining the position of the rotor on the basis of the value of the 2n signals ($C_{1.2}$, $C_{2.3}$, ......, $C_{(n-1).(n)}$, $C_{n.1}$, $C_{10}$, $C_{20}$, ......, and $C_{n0}$) representative of the position of the rotor, according to predefined rules.

9. Method according to Claim 8, **characterized in that** the method includes, in the case where n is odd and/or the n stator windings are regularly distributed, the following step:

   - determining the position of the rotor with a precision of 360/4n electrical degrees.

10. Method according to Claim 8, **characterized in that** the method includes, in the case where n is even and/or the n stator windings are regularly distributed, the following step:

    - determining the position of the rotor with a precision of 360/2n electrical degrees.

11. Method according to Claim 8, **characterized in that** the method includes, in the case where n is even and/or the n/2 windings form a first system of regularly distributed windings, the n/2 other windings form a second system of regularly distributed windings and the two systems are out of phase by 360/(2n) electrical degrees, the following step:

    - determining the position of the rotor with a precision of 360/4n electrical degrees.

12. Method according to any one of Claims 1 to 11, **characterized in that**

    - the 2n signals ($C_{1.2}$, $C_{2.3}$, ......, $C_{(n-1).(n)}$, $C_{n.1}$, $C_{10}$, $C_{20}$,......, and $C_{n0}$) are rectangular and of the same frequency; and
    - said signals are obtained by a synchronous demodulation, this synchronous demodulation being a synchronization defined by a delay relative to a rising front of the command of the chopper.

13. Method according to any one of Claims 1 to 12, **characterized in that** the method includes the following step:

    - determining the position of the rotor, when the machine is stopped.

14. Device for implementing a method for determining the position of a rotor of a machine, including an electric machine connected to a driving device, said driving device being connected to a logic controller, the logic controller implementing said method and delivering a position of the rotor, and said machine including a rotor equipped with a least one excitation winding supplied with a voltage that varies over time by a chopper the duty cycle of which belongs to the interval [0.01, 0.99], the device including

    - means for inhibiting the driving device;
    - means for applying an excitation voltage that varies over time to the rotor, by means of the chopper;
    - means for measuring an electromotive force ($e_1$, $e_2$ or ... $e_n$) induced in each of the stator windings;
    - means for determining a position of the rotor when it has stopped or is moving at low speed, via at least one operation of comparing the induced electromotive forces and at least one operation of comparing an induced electromotive force and a common reference;
    - means for implementing the commands of the driving device, depending on the determined position of the rotor.

| Le nombre de phases n | 12 |
| Inhibition | 13 |
| Mesure des f.e.m | 14 |
| Démodulation | 15 |
| Comparaison | 16 |
| Traitement numérique | 17 |
| Position rotor | 18 |
| Précision sur la position | 19 |
| Commande onduleur | 20 |

**Fig. 1**

**Fig. 2**

```
                          ┌─────────────────────────┐
                          │  Inhibition de la commande│
                          │      de l'onduleur        │
                     30 ──┤                           │
                          └─────────────┬─────────────┘
                                        ▼
                          ┌─────────────────────────┐
                          │ Mesures des fem e₁ à en  │── 31
                          └─────────────┬─────────────┘
                                     ┌─ 32
                                     ▼
                          ┌─────────────────────────┐
                          │   Démodulation des fem.  │
                          └─────────────────────────┘
```

Position du rotor = $\dfrac{360}{2n}$ degrés électriques

Si $e_1 > e_2$

Si $e_2 > e_3$

Si $e_{n-1} > e_n$

Si $e_n > c_1$

oui | non

$C_{12} = 1$  $C_{12} = 0$

$C_{23} = 1$  $C_{23} = 0$

$C_{n-1,n} = 1$  $C_{n-1,n} = 0$

$C_{n1} = 1$  $C_{n1} = 0$

Détermination du signal $R_1$ représentatif de la position du rotor

Détermination du signal $R_2$ représentatif de la position du rotor

Détermination du signal $R_{n+1}$ représentatif de la position du rotor

Détermination du signal $R_n$ représentatif de la position du rotor

Position du rotor

Si n impair

Si n = pair

phases régulières

phases irrégulières

Précision de la position du rotor = $\dfrac{360}{2n}$ degrés électriques

Précision = $\dfrac{360}{n}$ degrés électriques

Précision = $\dfrac{360}{2n}$ degrés électriques

## Fig. 3

20

**Fig. 4**

**Fig. 5**

**Fig. 6**

**Fig. 7**

22

**Fig. 8**

**Fig. 9**

**Fig. 10**

Fig. 11a

Fig. 11b

25

Fig. 11C